# EUROPEAN PATENT APPLICATION

(11) **EP 4 432 756 A1**
(43) Date of publication of application: **18.09.2024**
(21) Application number: 22910200.9
(22) Date of filing: 23.12.2022
(51) Int. Cl.: H04W 72/04

(54) **COMMUNICATION METHOD AND APPARATUS, AND COMPUTER-READABLE STORAGE MEDIUM**

(30) Priority: 24.12.2021 CN 202111600972
(71) Applicant: Huawei Technologies Co., Ltd., Shenzhen, Guangdong 518129 (CN)
(72) Inventor: XU, Zhou, Shenzhen, Guangdong 518129 (CN); ZHANG, Liwen, Shenzhen, Guangdong 518129 (CN)
(74) Representative: MERH-IP Matias Erny Reichl Hoffmann Patentanwälte PartG mbB
(86) International application number: PCT/CN2022/141454
(87) International publication number: WO 2023/116890

(57) **Abstract**

Embodiments of the present invention disclose a communication method and apparatus, and a computer-readable storage medium. An access network device sends resource information to a terminal device, where the resource information includes information about N uplink resources and information about M downlink resources, and N and M are integers greater than or equal to 2. Then, the terminal device sends a random access request to the access network device over one of the N uplink resources (namely, a first resource). Correspondingly, the access network device may receive the random access request from the terminal device over the first resource, and may send a random access response to the terminal device over one of the M downlink resources (namely, a second resource). In embodiments of the present invention, the access network device may send information about a plurality of uplink resources and information about a plurality of downlink resources to the terminal device, the terminal device may perform access over one of the uplink resources, and the access network device may respond over one downlink resource, so that system resource utilization can be improved.

## Description

This application claims priority to Chinese Patent Application No. 202111600972.0, filed with the China National Intellectual Property Administration on December 24, 2021 and entitled "COMMUNICATION METHOD AND APPARATUS, AND COMPUTER-READABLE STORAGE MEDIUM", which is incorporated herein by reference in its entirety.

### TECHNICAL FIELD

The present invention relates to the field of communication technologies, and in particular, to a communication method and apparatus, and a computer-readable storage medium.

### BACKGROUND

With continuous development of communication technologies, terminal devices have increasingly diversified forms, such as a smartphone, an uncrewed aerial vehicle, a robotic arm, a smart car, and a network camera. Correspondingly, communication services are increasingly diversified, such as live streaming, ultra high definition video, augmented reality (augmented reality, AR), virtual reality (virtual reality, VR), smart factory (smart factory, SF), and the like. Before performing various communication services, a terminal device needs to first select a cell within coverage of an access network device for access, to obtain a network service.

Currently, to enable the terminal device to access a cell, the access network device broadcasts resource information of each cell on a frequency corresponding to each cell within the coverage of the access network device. Resource information of a cell includes information about an initial uplink resource and information about an initial downlink resource of the cell. Initial uplink resources and initial downlink resources of different cells are different, and there is a correspondence between an initial uplink resource and an initial downlink resource of one cell. Correspondingly, the terminal device may receive, on different frequencies, resource information of the cells broadcast by the access network device. Then, the terminal device may select a cell, send a random access request to a base station over an initial uplink resource of the cell, and receive a random access response from the access network device over an initial downlink resource of the cell. When the terminal device successfully accesses the cell, the access network device may allocate a data channel resource of the cell to the terminal device, so that the terminal device performs data transmission. In the meantime, how to enable a terminal device to access a cell more flexibly and improve system resource utilization is an issue of concern of a person skilled in the art.

### SUMMARY

Embodiments of the present invention disclose a communication method and apparatus, and a computer-readable storage medium, to improve system resource utilization.

According to a first aspect, a communication method is disclosed. The communication method may be applied to an access network device or a module (for example, a chip) in the access network device. An example in which the communication method is applied to an access network device is used below for description. The communication method may include:
sending resource information to a terminal device, where the resource information includes information about N uplink resources and information about M downlink resources, N and M are integers greater than or equal to 2, the N uplink resources belong to one or more frequency bands, the M downlink resources belong to one or more frequency bands, and a frequency band to which the N uplink resources belong is the same as or different from a frequency band to which the M downlink resources belong;
receiving a random access request from the terminal device over a first resource, where the first resource is one of the N uplink resources; and
sending a random access response to the terminal device over a second resource, where the second resource is one of the M downlink resources.

In this embodiment of the present invention, the access network device may send information about a plurality of uplink resources (namely, the N uplink resources) and information about a plurality of downlink resources (namely, the M downlink resources) to the terminal device. Then, the terminal device may flexibly send the random access request over one of the uplink resources (namely, the first resource). Then, when the access network device receives the random access request from the terminal device, the access network device may flexibly send the random access response over one of the downlink resources (namely, the second resource). The plurality of uplink resources and the plurality of downlink resources may be initial uplink resources and initial downlink resources of a plurality of cells within coverage of the access network device. It can be learned that, because the terminal device may flexibly send the random access request over one resource, and the access network device may flexibly send the random access response over one resource, system resource utilization can be improved.

In a possible implementation, the method may further include:
sending N reference signals to the terminal device, where the N reference signals one-to-one correspond with the N uplink resources.

In this embodiment of the present invention, the access network device may send the N reference signals to the terminal device, so that the terminal device may select, based on signal quality corresponding to the N reference signals, a best resource from the N uplink resources for access.

In a possible implementation, one of the N uplink resources corresponds to a plurality of downlink resources in the M downlink resources, and the method may further include:
determining a downlink resource corresponding to the first resource in the N uplink resources, to obtain K downlink resources, where K is an integer greater than or equal to 2 and less than or equal to M; and
selecting the second resource from the K downlink resources.

In this embodiment of the present invention, one of the N uplink resources may correspond to a plurality of downlink resources in the M downlink resources. Therefore, the access network device may first determine the K downlink resources corresponding to the first resource in the N uplink resources, and then select one resource (namely, the second resource) from the K downlink resources to send the random access response to the terminal device. It can be learned that the access network device may flexibly select one resource from the K downlink resources to send the random access response to the terminal device, and may send random access responses to different terminal devices over different downlink resources, so that access requirements of more terminal devices can be met.

In a possible implementation, the selecting the second resource from the K downlink resources includes:
determining a resource with lowest utilization in the K downlink resources as the second resource.

In this embodiment of the present invention, the access network device may select the resource with the lowest utilization in the K downlink resources, to send the random access response to the terminal device, so that the K resources can be used in a balanced manner.

In a possible implementation, one of the N uplink resources corresponds to one of the M downlink resources, and the method may further include:
determining a downlink resource corresponding to the first resource in the N uplink resources, to obtain the second resource.

In this embodiment of the present invention, one of the N uplink resources may correspond to one of the M downlink resources. Therefore, the access network device may first determine the downlink resource (namely, the second resource) corresponding to the first resource in the N uplink resources, and then send the random access response to the terminal device over the downlink resource. It can be learned that, because one uplink resource may correspond to one downlink resource, the terminal device may monitor only the downlink resource corresponding to the first resource, and does not need to monitor a plurality of downlink resources, reducing average power consumption of the terminal device.

In a possible implementation, the method may further include:
receiving capability information from the terminal device, where the capability information includes L frequency band sets and information about a bandwidth corresponding to a frequency band included in the L frequency band sets, and L is a positive integer greater than or equal to 1;
allocating a third resource to the terminal device based on the capability information and a downlink data amount, where the third resource includes one or more resources, and the third resource belongs to a same frequency band or different frequency bands; and
sending information about the third resource to the terminal device, where the third resource is used by the access network device for downlink data transmission.

In this embodiment of the present invention, the access network device may receive the capability information from the terminal device. Then, when the terminal device has downlink data, the access network device may allocate a resource (that is, the third resource) to the terminal device based on the capability information of the terminal device and a downlink data amount, and then may send the information about the third resource to the terminal device. In addition, the third resource allocated by the access network device to the terminal device may include one or more resources, and may belong to a same frequency band or different frequency bands, so that advantages (coverage, bandwidth, and the like) of different frequency bands can be fully utilized, to maximize resource utilization.

In a possible implementation, the method may further include:
receiving a resource allocation request from the terminal device, where the resource allocation request includes an uplink data amount;
allocating a fourth resource to the terminal device based on the capability information and the uplink data amount, where the fourth resource includes one or more resources, the fourth resource belongs to a same frequency band or different frequency bands, and a frequency band corresponding to the third resource is the same as or different from a frequency band corresponding to the fourth resource; and
sending information about the fourth resource to the terminal device, where the fourth resource is used by the access network device for uplink data reception.

In this embodiment of the present invention, the access network device may receive the resource allocation request from the terminal device, and the resource allocation request may include the uplink data amount. Then, the access network device may allocate a resource (namely, the fourth resource) to the terminal device based on the capability information of the terminal device and the uplink data amount, and then may send the information about the fourth resource to the terminal device. The fourth resource allocated by the access network device to the terminal device may include one or more resources, and may belong to a same frequency band or different frequency bands. The third resource and the fourth resource are independent of each other, and may belong to a same frequency band or different frequency bands. It can be learned that the access network device may divide all available frequency band resources into uplink resources and downlink resources, schedule resources in a unified manner, and flexibly allocate an uplink/downlink resource to the terminal device based on a requirement of the terminal device, so that advantages (coverage, bandwidth, and the like) of different frequency bands can be fully utilized, to maximize resource utilization.

According to a second aspect, a communication method is disclosed. The communication method may be applied to a terminal device or a module (for example, a chip) in the terminal device. An example in which the communication method is applied to a terminal device is used below for description. The communication method may include:
receiving resource information from an access network device, where the resource information includes information about N uplink resources and information about M downlink resources, N and M are integers greater than or equal to 2, the N uplink resources belong to one or more frequency bands, the M downlink resources belong to one or more frequency bands, and a frequency band to which the N uplink resources belong is the same as or different from a frequency band to which the M downlink resources belong;
sending a random access request to the access network device over a first resource, where the first resource is one of the N uplink resources; and
receiving a random access response from the access network device over a second resource, where the second resource is one of the M downlink resources.

In this embodiment of the present invention, a terminal device may receive information about a plurality of uplink resources (that is, the N uplink resources) and information about a plurality of downlink resources (that is, the M downlink resources) from the access network device. Then, the terminal device may flexibly send the random access request over one of the uplink resources (namely, the first resource). Then, when the access network device receives the random access request from the terminal device, the access network device may flexibly send the random access response over one of the downlink resources (namely, the second resource). Correspondingly, the terminal device may receive the random access response from the access network device over the second resource. The plurality of uplink resources and the plurality of downlink resources may be initial uplink resources and initial downlink resources of a plurality of cells within coverage of the access network device. It can be learned that, because the terminal device may flexibly send the random access request over one resource, and the access network device may flexibly send the random access response over one resource, system resource utilization can be improved.

In a possible implementation, the method may further include:
selecting the first resource from the N uplink resources.

In this embodiment of the present invention, the terminal device may first select the first resource from the N uplink resources according to a specific rule, to ensure that the terminal device can successfully send the random access response to the access network device over the first resource.

In a possible implementation, the selecting the first resource from the N uplink resources includes:
selecting the first resource from the N uplink resources based on a capability of the terminal device.

In this embodiment of the present invention, because the terminal device cannot use a resource that is not supported by the capability (a frequency band, a bandwidth, a subcarrier bandwidth, and the like that are supported) of the terminal device, the terminal device may first select the first resource based on the capability of the terminal device, to ensure that the random access response can be successfully sent to the access network device over the first resource.

In a possible implementation, the method may further include:
receiving N reference signals from the access network device, where the N reference signals one-to-one correspond with the N uplink resources; and
determining N pieces of signal quality based on the N reference signals, where the N reference signals one-to-one correspond with the N pieces of signal quality; and
the selecting the first resource from the N uplink resources includes:
   determining a resource corresponding to best signal quality in the N uplink resources as the first resource.

In this embodiment of the present invention, the terminal device may receive the N reference signals from the access network device, may determine the N pieces of signal quality based on the N reference signals, and may determine the resource corresponding to the best signal quality in the N uplink resources as the first resource. Then, the terminal device may send the random access response to the access network device over the first resource. It can be learned that, because the terminal device selects the resource corresponding to the best signal quality in the N uplink resources, it can be ensured to a maximum extent that the access network device can receive the random access response sent by the terminal device.

In a possible implementation, one of the N uplink resources corresponds to a plurality of downlink resources in the M downlink resources, and the method may further include:
determining a downlink resource corresponding to the first resource in the N uplink resources, to obtain K downlink resources, where the K downlink resources include the second resource, and K is an integer greater than or equal to 2 and less than or equal to M; and
the receiving a random access response from the access network device over a second resource includes:
   receiving the random access response from the access network device over the K downlink resources.

In this embodiment of the present invention, one of the N uplink resources may correspond to a plurality of downlink resources in the M downlink resources. Therefore, the terminal device may first determine the K downlink resources corresponding to the first resource in the N uplink resources, so that the random access response from the access network device can be received over the K downlink resources.

In a possible implementation, one of the N uplink resources corresponds to one of the M downlink resources, and the method may further include:
determining a downlink resource corresponding to the first resource in the N uplink resources, to obtain the second resource.

In this embodiment of the present invention, one of the N uplink resources may correspond to one of the M downlink resources. Therefore, the terminal device may first determine the downlink resource (namely, the second resource) corresponding to the first resource in the N uplink resources, and then the terminal device may receive the random access response from the access network device over the second resource. It can be learned that, because one uplink resource may correspond to one downlink resource, the terminal device may monitor only the downlink resource corresponding to the first resource, and does not need to monitor a plurality of downlink resources, reducing average power consumption of the terminal device.

In a possible implementation, the method may further include:
sending capability information to the access network device, where the capability information includes L frequency band sets and information about a bandwidth corresponding to a frequency band included in the L frequency band sets, and L is a positive integer greater than or equal to 1; and
receiving information about a third resource from the access network device, where the third resource includes one or more resources, the third resource belongs to a same frequency band or different frequency bands, and the third resource is used by the terminal device to receive downlink data.

In this embodiment of the present invention, the terminal device may send the capability information to the access network device, so that when the terminal device has downlink data, the access network device may flexibly allocate a resource (that is, the third resource) to the terminal device based on the capability information of the terminal device and a downlink data amount. Because the third resource allocated by the access network device to the terminal device may include one or more resources, and may belong to a same frequency band or different frequency bands, so that advantages (coverage, bandwidth, and the like) of different frequency bands can be fully utilized, to maximize resource utilization.

In a possible implementation, the method further includes:
sending a resource allocation request to the access network device, where the resource allocation request includes an uplink data amount; and
receive information about a fourth resource from the access network device, where the fourth resource includes one or more resources, the fourth resource belongs to a same frequency band or different frequency bands, and the fourth resource is used by the terminal device to transmit uplink data.

In this embodiment of the present invention, when the terminal device has uplink data, the terminal device may send the resource allocation request to the access network device. The resource allocation request may include the uplink data amount. When the access network device receives the resource allocation request from the terminal device, the access network device may allocate a resource (namely, the fourth resource) to the terminal device based on the capability information of the terminal device and the uplink data amount. In addition, the fourth resource allocated by the access network device to the terminal device may include one or more resources, and may belong to a same frequency band or different frequency bands. In addition, the third resource and the fourth resource are independent of each other, and may belong to a same frequency band or different frequency bands. It can be learned that the access network device may divide all available frequency band resources into uplink resources and downlink resources, schedule resources in a unified manner, and flexibly allocate an uplink/downlink resource to the terminal device based on a requirement of the terminal device, so that advantages (coverage, bandwidth, and the like) of different frequency bands can be fully utilized, to maximize resource utilization. In addition, because the uplink resource and the downlink resource used by the terminal device may belong to different frequency bands, a requirement on a carrier capability of the terminal device can be reduced while a downlink bandwidth and uplink coverage are ensured.

According to a third aspect, a communication apparatus is disclosed. The communication apparatus may be an access network device or a module (for example, a chip) in the access network device. The apparatus may include:
a sending unit, configured to send resource information to a terminal device, where the resource information includes information about N uplink resources and information about M downlink resources, N and M are integers greater than or equal to 2, the N uplink resources belong to one or more frequency bands, the M downlink resources belong to one or more frequency bands, and a frequency band to which the N uplink resources belong is the same as or different from a frequency band to which the M downlink resources belong; and
a receiving unit, configured to receive a random access request from the terminal device over a first resource, where the first resource is one of the N uplink resources.

The sending unit is further configured to send a random access response to the terminal device over a second resource, where the second resource is one of the M downlink resources.

In a possible implementation, the sending unit is further configured to send N reference signals to the terminal device, where the N reference signals one-to-one correspond with the N uplink resources.

In a possible implementation, one of the N uplink resources corresponds to a plurality of downlink resources in the M downlink resources, and the apparatus may further include:
a first determining unit, configured to determine a downlink resource corresponding to the first resource in the N uplink resources, to obtain K downlink resources, where K is an integer greater than or equal to 2 and less than or equal to M; and
a selection unit, configured to select the second resource from the K downlink resources.

In a possible implementation, that the selection unit selects the second resource from the K downlink resources includes: determining a resource with lowest utilization in the K downlink resources as the second resource.

In a possible implementation, one of the N uplink resources corresponds to one downlink resource in the M downlink resources, and the apparatus may further include:
a second determining unit, configured to determine a downlink resource corresponding to the first resource in the N uplink resources, to obtain the second resource.

In a possible implementation, the receiving unit is further configured to receive capability information from the terminal device, where the capability information includes L frequency band sets and information about a bandwidth corresponding to a frequency band included in the L frequency band sets, and L is a positive integer greater than or equal to 1.

The apparatus may further include:
an allocation unit, configured to allocate a third resource to the terminal device based on the capability information and a downlink data amount, where the third resource includes one or more resources, and the third resource belongs to a same frequency band or different frequency bands.

The sending unit is further configured to send information about the third resource to the terminal device, where the third resource is used by the access network device for downlink data transmission.

In a possible implementation, the receiving unit is further configured to receive a resource allocation request from the terminal device, where the resource allocation request includes an uplink data amount.

The allocation unit is further configured to allocate a fourth resource to the terminal device based on the capability information and the uplink data amount, where the fourth resource includes one or more resources, the fourth resource belongs to a same frequency band or different frequency bands, and a frequency band corresponding to the third resource is the same as or different from a frequency band corresponding to the fourth resource.

The sending unit is further configured to send information about the fourth resource to the terminal device, where the fourth resource is used by the access network device for uplink data reception.

According to a fourth aspect, a communication apparatus is disclosed. The communication apparatus may be a terminal device or a module (for example, a chip) in the terminal device. The apparatus may include:
a receiving unit, configured to receive resource information from an access network device, where the resource information includes information about N uplink resources and information about M downlink resources, N and M are integers greater than or equal to 2, the N uplink resources belong to one or more frequency bands, the M downlink resources belong to one or more frequency bands, and a frequency band to which the N uplink resources belong is the same as or different from a frequency band to which the M downlink resources belong; and
a sending unit, configured to send a random access request to the access network device over a first resource, where the first resource is one of the N uplink resources.

The receiving unit is further configured to receive a random access response from the access network device over a second resource, where the second resource is one of the M downlink resources.

In a possible implementation, the apparatus may further include:
a selection unit, configured to select the first resource from the N uplink resources.

In a possible implementation, the selection unit is specifically configured to select the first resource from the N uplink resources based on a capability of the terminal device.

In a possible implementation, the receiving unit is further configured to receive N reference signals from the access network device, where the N reference signals one-to-one correspond with the N uplink resources.

The apparatus may further include:
a determining unit, configured to determine N pieces of signal quality based on the N reference signals, where the N reference signals one-to-one correspond with the N pieces of signal quality.

That the selection unit selects the first resource from the N uplink resources includes:
determining a resource corresponding to best signal quality in the N uplink resources as the first resource.

In a possible implementation, one of the N uplink resources corresponds to a plurality of downlink resources in the M downlink resources, and the determining unit is further configured to determine a downlink resource corresponding to the first resource in the N uplink resources, to obtain K downlink resources, where the K downlink resources include the second resource, and K is an integer greater than or equal to 2 and less than or equal to M.

That the receiving unit receives the random access response from the access network device over the second resource includes:
receiving the random access response from the access network device over the K downlink resources.

In a possible implementation, one of the N uplink resources corresponds to one of the M downlink resources, and the determining unit is further configured to determine a downlink resource corresponding to the first resource in the N uplink resources, to obtain the second resource.

In a possible implementation, the sending unit is further configured to send capability information to the access network device, where the capability information includes L frequency band sets and information about a bandwidth corresponding to a frequency band included in the L frequency band sets, and L is a positive integer greater than or equal to 1.

The receiving unit is further configured to receive information about a third resource from the access network device, where the third resource includes one or more resources, the third resource belongs to a same frequency band or different frequency bands, and the third resource is used by the terminal device to receive downlink data.

In a possible implementation, the sending unit is further configured to send a resource allocation request to the access network device, where the resource allocation request includes an uplink data amount.

The receiving unit is further configured to receive information about a fourth resource from the access network device, where the fourth resource includes one or more resources, the fourth resource belongs to a same frequency band or different frequency bands, and the fourth resource is used by the terminal device to transmit uplink data.

According to a fifth aspect, a communication apparatus is disclosed. The communication apparatus may be an access network device or a module (for example, a chip) in the access network device. The communication apparatus may include a processor, a memory, and a transceiver. The transceiver is configured to: receive information from a communication apparatus other than the communication apparatus, and output information to a communication apparatus other than the communication apparatus. When the processor executes a computer program stored in the memory, the processor is enabled to perform the communication method according to any one of the first aspect or the implementations of the first aspect.

According to a sixth aspect, a communication apparatus is disclosed. The communication apparatus may be a terminal device or a module (for example, a chip) in the terminal device. The communication apparatus may include a processor, a memory, and a transceiver. The transceiver is configured to: receive information from a communication apparatus other than the communication apparatus, and output information to a communication apparatus other than the communication apparatus. When the processor executes a computer program stored in the memory, the processor is enabled to perform the communication method according to any one of the second aspect or the implementations of the second aspect.

According to a seventh aspect, a communication system is disclosed. The communication system includes the communication apparatus in the fifth aspect and the communication apparatus in the sixth aspect.

According to an eighth aspect, a computer-readable storage medium is disclosed. The computer-readable storage medium stores a computer program or computer instructions, and when the computer program or the computer instructions are run, the communication method according to the foregoing aspects is implemented.

According to a ninth aspect, a chip is disclosed, including a processor, configured to execute a program stored in a memory. When the program is executed, the chip is enabled to perform the communication method according to the foregoing aspects.

In a possible implementation, the memory is located outside the chip.

According to a tenth aspect, a computer program product is disclosed. The computer program product includes computer program code, and when the computer program code is run, the foregoing communication method is performed.

### BRIEF DESCRIPTION OF DRAWINGS

To describe the technical solutions in embodiments of the present invention more clearly, the following briefly describes the accompanying drawings needed for describing the embodiments. It is clear that the accompanying drawings in the following descriptions show merely some embodiments of the present invention, and a person of ordinary skill in the art may derive other drawings from these accompanying drawings without creative efforts.
FIG. 1 is a diagram of a network architecture according to an embodiment of the present invention;
FIG. 2 is a diagram of a carrier aggregation scenario according to an embodiment of the present invention;
FIG. 3 is a diagram of an SUL scenario according to an embodiment of the present invention;
FIG. 4 is a schematic flowchart of a communication method according to an embodiment of the present invention;
FIG. 5 is a diagram of resource allocation according to an embodiment of the present invention;
FIG. 6 is a diagram of a structure of a communication apparatus according to an embodiment of the present invention;
FIG. 7 is a diagram of a structure of another communication apparatus according to an embodiment of the present invention;
FIG. 8 is a diagram of a structure of still another communication apparatus according to an embodiment of the present invention;
FIG. 9 is a diagram of a structure of still another communication apparatus according to an embodiment of the present invention; and
FIG. 10 is a diagram of a structure of a communication system according to an embodiment of the present invention.

### DESCRIPTION OF EMBODIMENTS

Embodiments of the present invention disclose a communication method and apparatus, and a computer-readable storage medium, to improve system resource utilization. The following clearly and completely describes the technical solutions in embodiments of this application with reference to the accompanying drawings in embodiments of this application.

It is clear that the described embodiments are merely some but not all of embodiments of this application. An "embodiment" mentioned in this specification means that a particular feature, structure, or characteristic described with reference to embodiments may be included in at least one embodiment of this embodiment application. The phrase appearing at various locations in this specification may not necessarily refer to a same embodiment, and is not an independent or optional embodiment exclusive from another embodiment. It may be understood explicitly and implicitly by a person skilled in the art that embodiments described in this specification may be combined with other embodiments. All other embodiments obtained by a person of ordinary skill in the art based on embodiments of this application without creative efforts shall fall within the protection scope of this application.

In this specification, claims, and accompanying drawings of this application, the terms "first", "second", "third", and the like are intended to distinguish between different objects but do not indicate a particular order. In addition, the terms "include", "have", and any other variants thereof are intended to cover a non-exclusive inclusion. For example, a series of steps or units are included, or optionally, steps or units that are not listed are further included, or optionally, other inherent steps or units of these processes, methods, products, or devices are further included.

The accompanying drawings show only a part rather than all content related to this application. Before example embodiments are discussed in more detail, it should be mentioned that some example embodiments are described as processing or methods described as flowcharts. Although the flowchart describes the operations (or steps) as sequential processing, many of the operations can be implemented in parallel, concurrently, or simultaneously. In addition, a sequence of the operations may be rearranged. The processing may be terminated when the operation is completed, but may also have additional steps that are not included in the accompanying drawings. The processing may correspond to a method, a function, a procedure, a subroutine, a subprogram, or the like.

Terms such as "component", "module", "system", and "unit" used in this specification indicate computer-related entities, hardware, firmware, combinations of hardware and software, software, or software being executed. For example, the unit may be, but is not limited to, a process running on a processor, a processor, an object, an executable file, an execution thread, a program, and/or distributed between two or more computers. In addition, these units may be executed by various computer-readable media that store various data structures. For example, the units may communicate with each other using a local and/or remote process and based on a signal having one or more data packets (for example, data from a second unit interacting with another unit in a local system, a distributed system, and/or across a network such as the internet interacting with another system via the signal).

The following first describes a network architecture used in embodiments of the present invention, to better understand embodiments of the present invention.

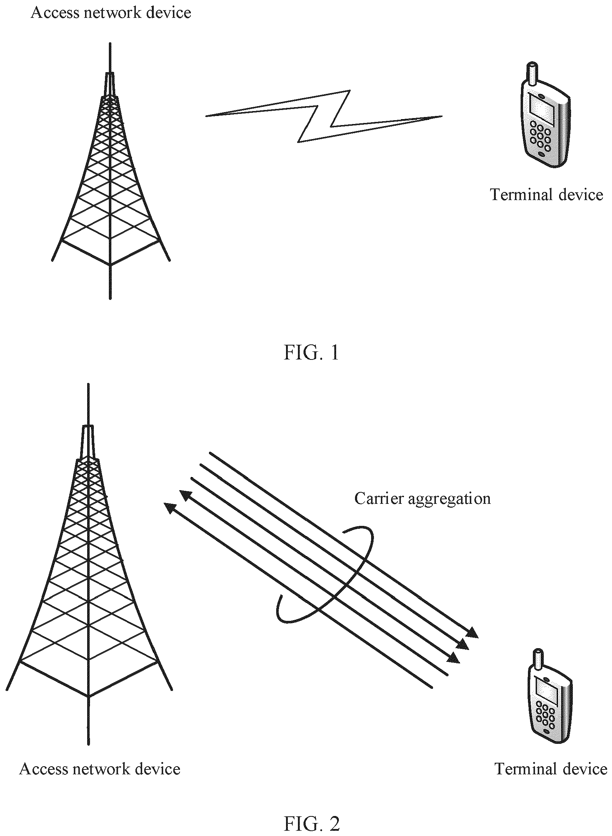

Refer to FIG. 1. FIG. 1 is a diagram of a network architecture according to an embodiment of the present invention. As shown in FIG. 1, the network architecture may include an access network device and a terminal device. The access network device may include one or more access network devices (one is shown in FIG. 1), and the terminal device may include one or more terminal devices (one is shown in FIG. 1). The access network devices may communicate with each other via an optical fiber interface, or may communicate with each other via an Xn interface. The terminal device may communicate with the access network device over the air (that is, an air interface, for example, a Uu interface).

Communication between the terminal device and the access network device may include uplink communication (that is, communication from the terminal device to the access network device) and downlink communication (that is, communication from the access network device to the terminal device). In the uplink communication, the terminal device may be configured to send an uplink signal to the access network device, and the access network device may be configured to receive the uplink signal from the terminal device. In the downlink communication, the access network device may be configured to send a downlink signal to the terminal device, and the terminal device may be configured to receive the downlink signal from the access network device. A link corresponding to the uplink communication may be referred to as an uplink, and a link corresponding to the downlink communication may be referred to as a downlink.

It should be understood that one access network device may simultaneously send information to one or more terminal devices. A plurality of access network devices may simultaneously send information to one terminal device.

It should be noted that the network architecture shown in FIG. 1 is not limited to including only the access network device and the terminal device shown in the figure.

It should be understood that the network architecture shown in FIG. 1 is merely an example for description, and constitutes no limitation thereto.

The terminal device may also be referred to as user equipment (user equipment, UE), a mobile station (mobile station, MS), a mobile terminal (mobile terminal, MT), or the like, and is a device that provides a user with voice and/or data connectivity. The terminal device may be a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, a wearable device (for example, a smartwatch, a smart band, or a pedometer), a vehicle-mounted device (for example, an automobile, a bicycle, an electric vehicle, an airplane, a ship, a train, or a high-speed rail), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, workshop equipment, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in smart home (smart home), a flying device (for example, an intelligent robot, a hot air balloon, an uncrewed aerial vehicle, or an airplane), or another device that can access a network.

The access network device may include a radio access network device, and the radio access network device is an apparatus that is deployed in a radio access network and that provides a wireless communication function for the terminal device. The radio access network (radio access network, RAN) device may include base stations (base station, BS) in various forms, for example, a macro base station, a micro base station (also referred to as a small cell), a relay station, or an access point. In systems that use different radio access technologies, names of radio access network devices may be different, for example, a base transceiver station (base transceiver station, BTS) in a global system for mobile communications (global system for mobile communications, GSM) or a code division multiple access (code division multiple access, CDMA) network, an NB (NodeB) in wideband code division multiple access (wideband code division multiple access, WCDMA), and an eNB or an eNodeB (evolved NodeB) in long term evolution (long term evolution, LTE). Alternatively, the radio access network device may be a radio controller in a cloud radio access network (cloud radio access network, CRAN) scenario. Alternatively, the radio access network device may be a base station device in a future network (such as 6G) or a radio access network device in a future evolved public land mobile network (public land mobile network, PLMN). Alternatively, the radio access network device may be a wearable device or a vehicle-mounted device. Alternatively, the radio access network device may be a transmission and reception point (transmission and reception point, TRP).

The following first describes related technologies in embodiments of the present invention, to better understand embodiments of the present invention.

Over the past several decades, wireless communication systems experienced technical evolution from 1st generation analogue communication to 5th generation mobile communication technology (5th generation, 5G) new radio (new radio, NR). Compared with previous generations of communication technologies, more frequency ranges can be used in 5G, and the frequency range may also be referred to as a frequency band for short.

Currently, an existing spectrum (that is, a 3rd generation mobile communication technology (3rd generation, 3G) operating spectrum, a 4th generation mobile communication technology (4th generation, 4G) operating spectrum, or the like) may evolve into a 5G operating spectrum (frequency band) through dynamic spectrum sharing (dynamic spectrum sharing, DSS), spectrum refarming (refarming), or the like. For example, 5G and 4G long term evolution (long term evolution, LTE) can share a same frequency band through DSS. For another example, some 4G operating frequency bands may be directly allocated to 5G for use through spectrum refarming, that is, frequency resources are replanned, and some 4G frequency resources are allocated to 5G. In addition, with continuous advancement of communication technologies, a network deployed based on 3G or the like gradually retires, and the 3G network is gradually out of use. Therefore, after a 3G service is disabled, a frequency band previously occupied by 3G may be reallocated to 5G for use. In addition, some unlicensed (unlicense) frequency bands may also be used as 5G operating frequency bands.

Operating frequency bands of NR may be roughly divided into two parts: a frequency range (frequency range, FR) 1 and a frequency range 2 (FR2). The frequency range of FR1 is 410 MHz to 7125 GHz, and the frequency range of FR2 is 24.25 GHz to 52.6 GHz.

FR1 may include a sub-3 G frequency band, that is, a frequency band below 3 GHz (that is, a frequency band between 410 MHz to 3 GHz) in FR1, for example, a 700 MHz/800 MHz/900 MHz/1.8 GHz/2.1 GHz/2.6 GHz frequency band. In FR1, another frequency band other than the sub-3G frequency band may be referred to as a C-band (band), for example, a 3.5 GHz/4.9 GHz frequency band. 700 MHz and 3.5 GHz may be abbreviated as 700 M and 3.5 G respectively. FR2 may include a 28 GHz/39 GHz frequency band, and the like.

Currently, a protocol specifies some paired frequency bands, which are independent frequency ranges of an uplink and a downlink, and also specifies some unpaired frequency bands, where the unpaired frequency band is a frequency range shared by the uplink and the downlink. The paired frequency bands are used for a frequency division duplex (frequency division duplex, FDD) mode, and the unpaired frequency band is used for a time division duplex (time division duplex, TDD) mode. The protocol further specifies some separate uplink frequency bands and downlink frequency bands, which are defined as an auxiliary/supplementary downlink (supplementary downlink, SDL) frequency band or an auxiliary/supplementary uplink (supplementary uplink, SUL) frequency band. The SUL may also be referred to as an auxiliary uplink carrier, and the SDL may also be referred to as an auxiliary downlink carrier. In addition, bandwidths of carriers or subcarriers corresponding to different frequency bands may be different.

In the R17 protocol, frequency ranges of some operating frequency bands of FR1 may be shown in Table 1.

**Table 1**

| Frequency band number | Uplink frequency range | Downlink frequency range | Duplex mode |
|---|---|---|---|
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz- 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| ... | ... | ... | ... |
| n28 | 703 MHz - 748 MHz | 758 MHz - 803 MHz | FDD |
| n50 | 1432 MHz- 1517 MHz | 1432 MHz - 1517 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz- 1785 MHz | N/A | SUL |
| ... | ... | ... | ... |

As shown in Table 1, the first column in the table is a number of an NR operating frequency band, the second column is a frequency range of an uplink frequency band of the frequency band, the third column is a frequency range of a downlink frequency band of the frequency band, and the third column is a duplex mode in which the frequency band operates.

It should be understood that Table 1 shows only some operating frequency bands in FR1.

In the R17 protocol, frequency ranges of operating frequency bands of FR2 may be shown in Table 2.

**Table 2**

| Frequency band number | Uplink frequency range/Downlink frequency range | Duplex mode |
|---|---|---|
| n257 | 26500 MHz - 29500 MHz | TDD |
| n258 | 24250 MHz - 27500 MHz | TDD |
| n259 | 39500 MHz - 43500 MHz | TDD |
| n260 | 37000 MHz - 40000 MHz | TDD |
| n261 | 27500 MHz - 28350 MHz | TDD |
| n262 | 47200 MHz - 48200 MHz | TDD |

Table 2 shows operating frequency bands in FR2. As shown in Table 2, the first column in the table is a number of an NR operating frequency band, the second column is a frequency range of an uplink frequency band and a downlink frequency range of the frequency band, and the third column is a duplex mode in which the frequency band operates. In the TDD mode, the uplink frequency range is the same as the downlink frequency range.

As available 5G frequency bands gradually increase, how to flexibly use these frequency resources is a technical direction of concern in a current 5G system.

In the 5G era, services are more diversified, and different services have different requirements on the uplink and downlink. For example, for a live streaming service, a larger uplink bandwidth may be needed, to enable a higher transmission rate of uplink data, to implement real-time uploading of live video data. However, a requirement for a downlink bandwidth is relatively small. For another example, for a video service such as ultra high definition, a larger downlink bandwidth may be needed, to enable a higher transmission rate of downlink data, to improve video playback smoothness. In addition, 5G is expected to support a variety of services such as augmented reality (augmented reality, AR), virtual reality (virtual reality, VR), smart factory, and the like. Therefore, in a 5G system, frequency domain resources need to be configured more flexibly, and advantages of each frequency band need to be fully leveraged, so that an overall capacity of a network, service quality of the network, and the like can be improved.

Currently, frequency domain resources of different frequency bands or a same frequency band may be combined for use by using a carrier aggregation (carrier aggregation, CA) technology or an SUL technology, to improve an information transmission rate, coverage of an access network device, and the like. Carrier aggregation mainly increases a transmission bandwidth by aggregating a plurality of carriers, so that a peak rate of a terminal device can be increased, to meet a requirement of a user for a transmission rate, and improve user experience.

CA can be classified into uplink carrier aggregation (uplink carrier aggregation, UL CA) and downlink carrier aggregation (downlink carrier aggregation, DL CA). Carriers participating in aggregation may be carriers that are contiguously distributed in a same frequency band, or may be carriers that are discretely distributed in a same frequency band, or may be carriers in different frequency bands. In addition, the plurality of carriers participating in aggregation are not limited to a same access network device, and may also be carriers of neighboring access network devices. Therefore, CA can be used to comprehensively utilize contiguous or non-contiguous frequency band resources owned by an operator. That is, CA can be used to aggregate a plurality of contiguous or non-contiguous carriers to increase a transmission bandwidth.

For example, a bandwidth of a single carrier is 5 MHz, and three carriers are aggregated through CA, so that the bandwidth can reach 15 MHz, improving a data transmission rate. Refer to FIG. 2. FIG. 2 is a diagram of a carrier aggregation scenario according to an embodiment of the present invention. As shown in FIG. 2, an access network device may send information to a terminal device over three carriers through carrier aggregation, and the terminal device may send information to the access network device over two carriers. Compared with a single carrier, an uplink/downlink data throughput in unit time can be increased, increasing a transmission rate of uplink/downlink data.

CA supports combination within a same or between different frequency bands. However, UL CA depends on DL CA. When a quantity of carriers to be aggregated on an uplink is N, a quantity of carriers to be aggregated on a downlink needs to be greater than or equal to N, where N is a positive integer greater than or equal to 2. However, some services may have a requirement only on an uplink transmission rate. For example, for a live streaming service, three carriers need to be aggregated on the uplink for data transmission to meet a requirement of the current live streaming service, and only one carrier is needed on the downlink. In this case, at least three carriers need to be aggregated on the downlink. Therefore, the terminal device needs to have a capability of processing a corresponding downlink carrier, and consequently, costs of the terminal device are high. In addition, in the CA technology, resources are frequently scheduled between a plurality of cells, and signaling overheads are high.

In addition, electromagnetic waves of different frequency bands have different characteristics. A wavelength of an electromagnetic wave in a low frequency band (for example, sub-1G, that is, a frequency band below 1 GHz) is relatively long. Therefore, the electromagnetic wave has a relatively strong penetration capability, a relatively strong diffraction capability, and relatively low loss during propagation in free space. Therefore, coverage of the electromagnetic wave in the low frequency band is relatively large, but the low frequency band has relatively fewer frequency domain resources. A wavelength of an electromagnetic wave in a high frequency band is relatively short, for example, a millimeter wave. The electromagnetic wave has a relatively weak penetration capability, a relatively weak diffraction capability, and relatively high loss during propagation in free space. Therefore, coverage of the electromagnetic wave in the high frequency band is relatively small, but the high frequency band has relatively more frequency domain resources, and correspondingly, a relatively large quantity of frequency domain resources can be allocated to a user.

In an actual test, it may be found that uplink coverage of the access network device differs greatly from downlink coverage of the terminal device. For example, generally, downlink coverage of a 6 GHz frequency band is equivalent to uplink coverage of a 2.6 GHz frequency band, and downlink coverage of a 4.9 GHz frequency band is equivalent to uplink coverage of a 1.8 GHz frequency band. This is because the access network device may use large power, a large antenna array, and the like for signal transmission, and downlink coverage of the access network device may be easily increased. However, for the uplink, limited by an antenna capability and transmit power of the terminal device, it is difficult to greatly improve the coverage. It can be learned that when the terminal device and the access network device use a same frequency band or similar frequency bands for the uplink and downlink, in an edge area covered by the access network device, the terminal device may receive a signal sent by the access network device, but the access network device may not receive a signal sent by the terminal device.

Resources of different frequency bands may also be combined for use over the SUL. The SUL is mainly used to add an auxiliary uplink carrier in addition to an original carrier, and is mainly used to resolve the problem of limited uplink coverage of the terminal device. The uplink carrier and the auxiliary uplink carrier may belong to a same access network device, or may belong to different access network devices.

In the 5G era, there are a relatively large quantity of frequency domain resources in a high frequency band, for example, a frequency band corresponding to a millimeter wave. However, greater signal loss occurs during transmission in a higher frequency band. Generally, a cell (cell) includes only one uplink carrier (uplink carrier) and one downlink carrier (downlink carrier), and the uplink carrier and the downlink carrier are in a same frequency band. However, because the transmit power of the terminal device is limited, uplink coverage of the UE may be limited. In an edge area covered by the access network device, information sent by the terminal device may not reach the access network device. Therefore, a carrier of a relatively low frequency band may be added, so that the terminal device sends information to the access network device in the edge area covered by the access network device. A normal uplink of the UE is referred to as an UL (uplink), a normal downlink is referred to as a DL (downlink), and an uplink corresponding to the auxiliary uplink carrier is referred to as an SUL. The SUL enables a cell to have one downlink carrier and two uplink carriers.

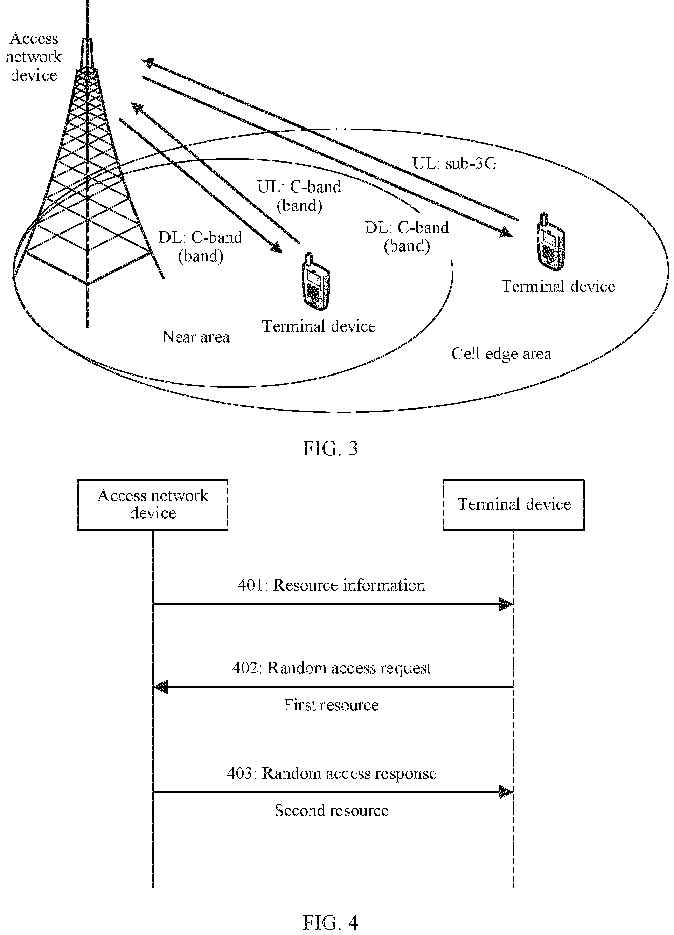

Refer to FIG. 3. FIG. 3 is a diagram of an SUL scenario according to an embodiment of the present invention. An UL and a DL use a C-band frequency band, and an SUL uses a sub-3G frequency band, that is, a frequency band below 3 GHz. As shown in FIG. 3, when a terminal device is located in a near area, uplink data may be transmitted on a C-band. In this case, the C-band can meet a requirement of a user for a transmission rate, and can provide good network service quality. When the terminal device is in a cell edge area, if uplink data is transmitted over a C-band, the access network device may not receive the data, and cannot provide good network service quality. Therefore, the uplink data may be transmitted on a sub-3G frequency band (for example, 1.8 GHz). Because the frequency band is low, uplink coverage can be improved, and a user requirement for a network can be met. However, the SUL standard supports only a fixed combination of one downlink frequency band (carrier) and two uplink frequency bands (carriers), and an SUL carrier needs to depend on a corresponding downlink carrier. However, in an actual case, a more flexible combination of uplink/downlink frequency bands may be needed to meet actual requirements of various services. For example, a plurality of uplink/downlink carriers on different frequency bands are needed to transmit data. Therefore, there is a limitation on the SUL manner.

It should be understood that the scenarios shown in FIG. 2 and FIG. 3 are merely examples for description, and do not constitute a limitation.

Currently, to facilitate access of a terminal device, an access network device broadcasts resource information of each cell on a frequency corresponding to each cell in coverage of the access network device. Resource information of a cell includes information about an initial uplink resource and information about an initial downlink resource of the cell. Correspondingly, the terminal device may receive, on different frequencies by searching for frequencies, resource information of a cell broadcast by the access network device. Then, the terminal device may select a cell, send a random access request to a base station over an initial uplink resource of the cell, and receive a random access response from the access network device over an initial downlink resource of the cell. However, if a large quantity of terminal devices initiate random access requests in a cell within the coverage of the access network device at a same time, an initial uplink resource and an initial downlink resource of the cell are easily limited. On the contrary, if a small quantity of terminal devices initiate random access requests in another cell within the coverage of the access network device, a large proportion of an initial uplink resource and an initial downlink resource of the cell is idle. It can be learned that resource usage of the cells is unbalanced in the foregoing case. Resources of one cell are limited, and another cell has many idle resources, resulting in low overall resource utilization of the system.

As available 5G frequency bands continuously increase, resources of different frequency bands may be used for networking, to improve system resource utilization, network service quality, and the like. Therefore, how to use resources of each frequency band more flexibly is a technical direction that a person skilled in the art needs to pay attention to.

Based on the foregoing network architecture, refer to FIG. 4. FIG. 4 is a schematic flowchart of a communication method according to an embodiment of the present invention. The communication method may be applied to scenarios such as CA, SUL, multi-radio access technology (radio access technology, RAT) dual connectivity (multi-RAT dual connectivity, MRDC), and multi-RAT multi-connectivity (multi-RAT multi-connectivity, MRMC), or may be applied to another similar scenario. This is not limited herein. As shown in FIG. 4, the communication method may include the following steps.

401: An access network device sends resource information to a terminal device.

Correspondingly, the terminal device may receive the resource information from the access network device.

The terminal device needs to establish a connection to the access network device before the access network device can provide a network service for the terminal device, so that the terminal device can upload data and receive data. Therefore, the access network device may send the resource information to the terminal device, so that the terminal device performs access to obtain a network service. To ensure that the terminal device can receive the resource information in a short time, the access network device may send the resource information to the terminal device at a fixed periodicity (for example, 50 ms).

The resource information may include information about N uplink resources and information about M downlink resources, where N and M are integers greater than or equal to 2, the N uplink resources may belong to one or more frequency bands, and the M downlink resources may belong to one or more frequency bands. The one or more frequency bands to which the N uplink resources belong may be the same as or different from the one or more frequency bands to which the M downlink resources belong. For example, the N uplink resources may include a resource 1, a resource 2, and a resource 3. The resource 1 may belong to a frequency band n5, the resource 2 may belong to a frequency band n7, and the resource 3 may belong to a frequency band n79. Alternatively, the resource 1, the resource 2, and the resource 3 may all belong to a frequency band n79. It should be understood that the resource 1 may alternatively belong to a frequency band n2, and both the resource 2 and the resource 3 may belong to a frequency band n79. This is not limited herein. In addition, the N uplink resources and the M downlink resources may be different, that is, time domain resources and/or frequency domain resources of the N uplink resources and the M downlink resources may be different.

The access network device may determine initial uplink resources of all cells within coverage of the access network device as the N uplink resources, or may determine initial downlink resources of all cells as the M downlink resources. Specifically, currently, coverage of one access network device may include a plurality of cells (that is, a plurality of carriers may be deployed on one access network device). The access network device broadcasts a system information block (system information block, SIB) 1 of each cell on a carrier corresponding to each cell (different cells correspond to different carriers). SIB1s of different cells are different, and the SIB1 of each cell carries or includes information about an initial uplink resource or information about an initial downlink resource of the cell. The initial uplink resource may be used for random access of the terminal device and the like, and the initial downlink resource may be used by the access network device to send a random access response to the terminal device and the like. In this embodiment of the present invention, the access network device may determine information about initial uplink resources included in SIB1s of all cells within the coverage as the information about the N uplink resources. Alternatively, the access network device may determine information about initial downlink resources included in SIB1s of all cells within the coverage as the information about the M downlink resources.

The access network device may send the resource information to the terminal device in a broadcast manner.

In a case, the access network device may send the resource information to the terminal device via a system message. The system message may carry or include the resource information. The system message may be a system information block (system information block, SIB) 1, an SIB2, or another system message.

In a possible implementation, the SIB 1 may carry information about a plurality of uplink resources (that is, the information about the N uplink resources). Specifically, to carry the information about the plurality of uplink resources in the SIB 1, an information element uplinkConfigCommon in an information element ServingCellConfigCommonSIB specified in an existing protocol may be changed to uplinkConifgCommonList. The information element uplinkConifgCommonList may be an uplinkConifgCommon list, and uplinkConifgCommonList may include a plurality of UplinkConfigCommonSIBs, as shown in the following:

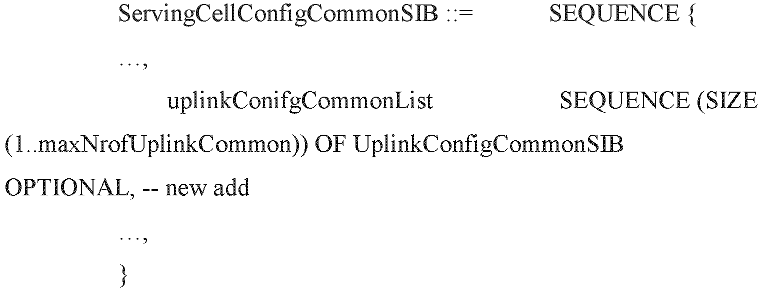

The information element (information element, IE) ServingCellConfigCommonSIB may be used to configure, in the SIB1, a specific parameter of a serving cell (cell) of the terminal device. UplinkConfigCommonSIB is a structure of an existing protocol, and may be used to configure, in the SIB 1, a common uplink configuration parameter of the serving cell of the terminal device, as shown in the following:

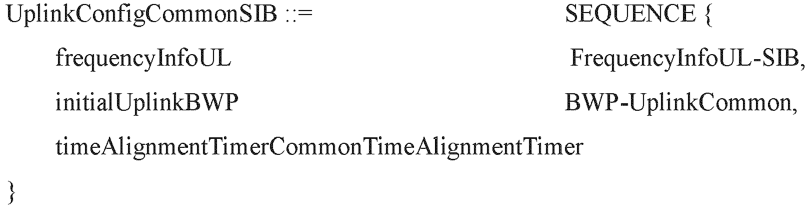

maxNrofUplinkCommon in the foregoing structure may indicate a quantity of uplink resources (that is, uplink carriers) that are carried. UplinkConfigCommonSIB may include common uplink configuration parameters of a cell, and may specifically include information such as frequency information (for example, a specific frequency) of an uplink carrier, initial uplink bandwidth part (bandwidth part, BWP) information, a time alignment (time alignment, TA) timer (timer), and the like. The initial uplink BWP may include resources such as a physical random access channel (physical random access channel, PRACH), a common (common) physical uplink control channel (physical uplink control channel, PUCCH), a physical uplink shared channel (physical uplink shared channel, PUSCH), and the like. BWP-UplinkCommon may include parameters of the initial uplink BWP, and may specifically include configuration parameters of the PRACH, the PUCCH, the PUSCH, and the like corresponding to the initial uplink BWP, a frequency domain location, a bandwidth, a used subcarrier spacing, and the like that are corresponding to the initial uplink BWP. The plurality of uplink resources may be random access resources.

Because the information about the N uplink resources is sent in a broadcast manner, all terminal devices within the coverage of the access network device can receive the information about the N uplink resources. If a plurality of terminal devices among these terminal devices need to perform access, downlink resources of the access network device may be limited, for example, resources such as a physical downlink control channel (physical downlink control channel, PDCCH), a physical downlink shared channel (physical downlink shared channel, PDSCH), and the like. However, when downlink resources are limited, the access network device can meet access requirements of only some terminal devices that initiate random access, that is, only some terminal devices can successfully access the network. Therefore, an access rate of the terminal device is low, and user experience is poor.

To avoid the foregoing case and improve the access rate of the terminal device, the access network device may broadcast information about a plurality of downlink resources (that is, the information about the M downlink resources) to the terminal device.

The SIB1 may also carry or include the information about the plurality of downlink resources. Specifically, to carry the information about the plurality of downlink resources in the SIB1, an information element downlinkConfigCommon in an information element ServingCellConfigCommonSIB specified in an existing protocol may be changed to downlinkConifgCommonList. The information element downlinkConifgCommonList may be a downlinkConifgCommon list, and downlinkConifgCommonList may include a plurality of DownlinkConfigCommonSIBs, as shown in the following:

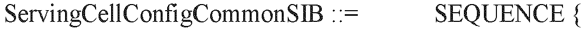

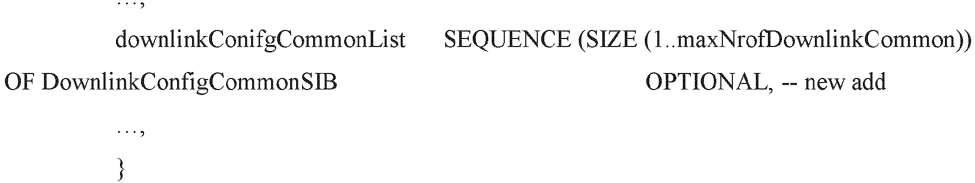

DownlinkConfigCommonSIB is a structure of an existing protocol, and may be used to configure, in the SIB 1, a common downlink configuration parameter of the serving cell of the terminal device, as shown in the following:

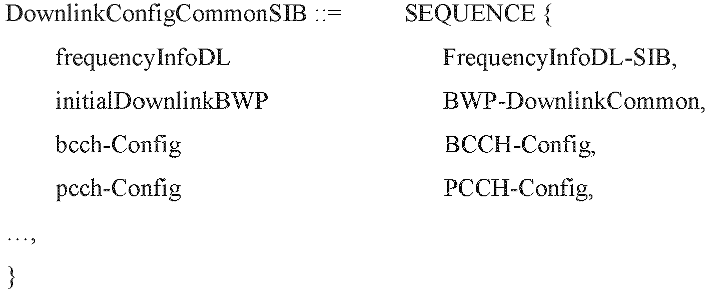

maxNrofDownlinkCommon in the foregoing structure may indicate a quantity of downlink resources (that is, downlink carriers) that are carried. DownlinkConfigCommonSIB may include common downlink configuration parameters of a cell, and may specifically include information such as frequency information (for example, a specific frequency) of a downlink carrier, initial downlink bandwidth part (bandwidth part, BWP) information, a broadcast control channel (broadcast control channel, BCCH) configuration, and a paging control channel (paging control channel, PCCH) configuration. The initial downlink BWP may include resources such as a physical downlink shared channel (physical downlink shared channel, PDSCH), a physical downlink control channel (physical downlink control channel, PDCCH), and the like. BWP-DownlinkCommon may include parameters of the initial downlink BWP, and may specifically include configuration parameters of the PDCCH and PDSCH corresponding to the initial downlink BWP, a frequency domain location, a bandwidth, a used subcarrier spacing, and the like that are corresponding to the initial downlink BWP.

In a case, there is no correspondence between the N uplink resources and the M downlink resources.

In another case, there is a correspondence between the N uplink resources and the M downlink resources. The correspondence may be that one of the N uplink resources corresponds to one of the M downlink resources, and one of the M downlink resources corresponds to one or more of the N uplink resources. Alternatively, the correspondence may be that one of the N uplink resources corresponds to a plurality of the M downlink resources, and one of the M downlink resources corresponds to one or more of the N uplink resources.

The correspondence between the N uplink resources and the M downlink resources may be configured by the access network device, or may be specified in a protocol. When the correspondence is configured by the access network device, the access network device may send the correspondence between the N uplink resources and the M downlink resources and the resource information to the terminal device together.

When the access network device sends the correspondence between the N uplink resources and the M downlink resources via the SIB1, to carry the correspondence between the plurality of uplink resources and the plurality of downlink resources in the SIB 1, an information element uplinkDownlinkConifgCommonPairList may be added to the information element ServingCellConfigCommonSIB specified in the existing protocol. uplinkDownlinkConifgCommonPairList may be a list of correspondences between uplink resources and downlink resources, and may include a plurality of uplinkDownlinkConifgCommonPairs. uplinkDownlinkConifgCommonPairList is a structure disclosed in this embodiment of the present invention, as shown in the following:

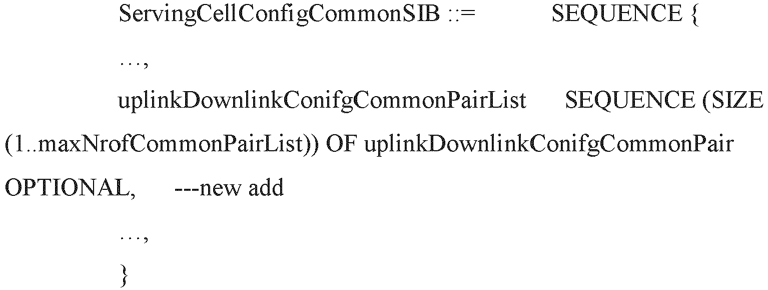

uplinkDownlinkConifgCommonPair is a structure disclosed in this embodiment of the present invention, and may be used to configure, in the SIB 1, a correspondence between an uplink resource and a downlink resource of the serving cell of the terminal device, as shown in the following:

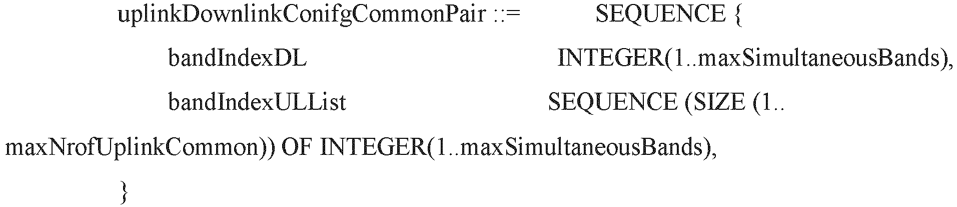

The foregoing structure may indicate a correspondence in which one uplink resource corresponds to one downlink resource, and one downlink resource corresponds to a plurality of uplink resources. maxNrofCommonPairList may indicate a quantity of correspondences between the N uplink resources and the M downlink resources, that is, a quantity of correspondences between uplink resources (that is, carriers) and downlink resources. uplinkDownlinkConifgCommonPair may specifically indicate a correspondence between one downlink resource and one or more uplink resources. bandIndexDL may be an index of a downlink resource, bandIndexULList may be an index of one or more uplink resources, and there is a correspondence between a downlink resource corresponding to bandIndexDL and a plurality of uplink resources corresponding to bandIndexULList. maxNrofUplinkCommon in uplinkDownlinkConifgCommonPair may be a quantity of uplink resources corresponding to a specific downlink resource (that is, the downlink resource corresponding to bandIndexDL), and may be different from maxNrofUplinkCommon corresponding to uplinkConifgCommonList.

For example, bandIndexDL may be 2, and bandIndexULList may be [2, 3, 7]. Therefore, there is a correspondence between a downlink resource corresponding to the downlink resource index 2 and an uplink resource corresponding to the uplink resource index 2, an uplink resource corresponding to the uplink resource index 3, and an uplink resource corresponding to the uplink resource index 7. In addition to establishing the correspondence between the uplink resource and the downlink resource based on the resource index, the correspondence may alternatively be established based on other information such as an identifier, a sequence number, or the like of the resource. It should be understood that, when the correspondence between the uplink resource and the downlink resource is another correspondence, definition of the structure uplinkDownlinkConifgCommonPair may be changed. For example, when one uplink resource corresponds to a plurality of downlink resources, bandIndexDL may be changed to bandIndexDLList, and a structure of bandIndexDLList may be defined as SEQUENCE (SIZE (1.. maxNrofUplinkCommon)). bandIndexULList may be changed to bandIndexUL, and a structure of bandIndexULList may be defined as INTEGER(1..maxSimultaneousBands).

The N uplink resources and the M downlink resources may be initial resources that belong to different cells of the access network device. One cell may include one or more uplink carriers (resources), and may include one or more downlink carriers. In an SUL case, one cell may include a plurality of uplink carriers. In an SDL case, one cell may include a plurality of downlink carriers. Currently, the access network device broadcasts, on a carrier corresponding to each cell, an SIB1 corresponding to each cell. However, in this embodiment of the present invention, one SIB1 may carry information about SIB1s of all cells (including information about an uplink resource, information about a downlink resource, and the like of each cell). Therefore, the access network device may broadcast the SIB1 on one carrier, or may broadcast the SIB1 on a plurality of carriers. If the access network device broadcasts the SIB1 on only one carrier, the access network device may choose to broadcast the SIB1 on a carrier of a low frequency band, to ensure large coverage of the SIB 1, so that the terminal device can receive the SIB 1. In addition, the access network device carries information about SIB1s of all cells via one SIB 1, so that sending of some repeated information (for example, some neighboring cell information and measurement information) can be reduced, saving transmission resources. In addition, because the access network device may not need to broadcast the SIB 1 on a plurality of carriers, a resource that is originally used to broadcast the SIB 1 on another carrier may be used to transmit data, improving a system throughput.

The access network device may further send one or more reference signals to the terminal device. For example, the access network device may send N reference signals to the terminal device, and the N reference signals one-to-one correspond with the N uplink resources. For another example, the access network device may send N+M reference signals to the terminal device. In this case, one of the N uplink resources may correspond to one or more reference signals, and M is an integer greater than or equal to 1. For another example, the access network device may send one reference signal to the terminal device. The reference signal may be a channel state information reference signal (channel state information reference signal, CSI-RS), a synchronization signal (synchronization signal, SS), a synchronization signal block (synchronization signal block, SSB), or another reference signal. This is not limited herein. A resource of a reference signal corresponding to an uplink resource may belong to a same frequency band as the uplink resource. Frequency domain resources, time domain resources, or space domain resources of the N or N+M reference signals are different. In other words, a plurality of reference signals may be distinguished in a manner of time division, frequency division, space division, or the like.

The access network device may also send the resource information to the terminal device via another message or signaling. For example, radio resource control (radio resource control, RRC) signaling, a media access control (media access control, MAC) control element (control element, CE), downlink control information (downlink control information, DCI), or the like may be used. This is not limited herein.

It may be understood that the access network device may further send information such as master system information (master information, MI), synchronization information, or the like to the terminal device. The master system information may be used by the terminal device to obtain synchronization signal block (synchronization signal block, SSB) beam information, a system frame number, time-frequency domain information of the SIB1, and the like. The synchronization information may be used by the terminal device for downlink synchronization. The access network device may send the master system information and the synchronization information in a broadcast manner.

402: The terminal device sends a random access request to the access network device over a first resource.

Correspondingly, the access network device may receive the random access request from the terminal device over the first resource. The first resource may be one of the N uplink resources.

When the terminal device needs the access network device to provide a network service, that is, when the terminal device needs to receive data or transmit data, the terminal device may send the random access request to the access network device over the first resource.

The terminal device may first select the first resource from the N uplink resources.

When there is no correspondence between the N uplink resources and the M downlink resources, the terminal device may select the first resource based on a capability of the terminal device, select the first resource based on signal quality, select the first resource based on a frequency band to which the N uplink resources belong, select the first resource based on a distance between the terminal device and the access network device, or select the first resource based on an SSB index (index). The SSB index may also be understood as a beam (beam) identifier (identity document, ID). In addition, the terminal device may further select a second resource based on a combination of two or more of the capability of the terminal device, the frequency band to which the N uplink resources belong, the distance between the terminal device and the access network device, the signal quality, and the SSB index. A rule for selecting the first resource from the N uplink resources by the terminal device is not limited herein.

When the terminal device selects the first resource from the N uplink resources based on the capability of the terminal device, the terminal device may select the first resource from the N uplink resources based on an uplink frequency band supported by the terminal device. For example, it is assumed that N is 5, and frequency bands corresponding to the N uplink resources are n1, n3, n7, n78, and n79 in Table 1. Uplink frequency bands supported by the terminal device are n1, n2, and n7 shown in Table 1, and n258 shown in Table 2. Because the terminal device cannot use a frequency band that is not supported by the terminal device, the terminal device may select uplink resources corresponding to frequency bands n1 and n7. The terminal device may select an uplink resource corresponding to the frequency band n1 as the first resource, or may select an uplink resource corresponding to the frequency band n7 as the first resource. It should be understood that the capability of the terminal device is not limited to a frequency band supported by the terminal device, and may further include a bandwidth, a subcarrier spacing, and the like that are supported by the terminal device. Therefore, when selecting the first resource from the N uplink resources, the terminal device may consider a maximum subcarrier spacing supported by the terminal device in addition to the frequency band supported by the terminal device.

When the terminal device selects the first resource from the N uplink resources based on signal quality, the terminal device may receive one or more reference signals from the access network device. When the terminal device receives the N reference signals, the terminal device may determine N pieces of signal quality based on the N reference signals, and then the terminal device may determine a resource corresponding to best signal quality in the N uplink resources as the first resource. The N reference signals one-to-one correspond with the N uplink resources, and the N reference signals one-to-one correspond with the N pieces of signal quality. The terminal device may determine signal quality of a reference signal by measuring a reference signal received power (reference signal received power, RSRP), a signal to interference plus noise ratio (signal to interference plus noise ratio, SINR), a received signal strength indicator (received signal strength indicator, RSSI), reference signal received quality (reference signal received quality, RSRQ), and the like of the reference signal. Alarger RSRP, SINR, RSSI, or RSRQ indicates better signal quality. On the contrary, a smaller RSRP, SINR, RSSI, or RSRQ indicates poorer signal quality.

For example, the terminal device may measure the RSRP of the N reference signals, and then the terminal device may determine an uplink resource corresponding to a reference signal with the largest RSRP (that is, a resource corresponding to best signal quality in the N uplink resources) as the first resource. Alternatively, the terminal device may sort the N uplink resources in descending order of RSRPs of the N reference signals. Then, the terminal device may randomly select an uplink resource from a plurality of uplink resources that rank top (that is, uplink resources whose RSRPs are greater than a specific threshold), and determine the uplink resource as the first resource. The RSRP measured by the terminal device may be synchronization signal reference signal received power (SS-RSRP) or channel state information reference signal received power (CSI-RSRP) based on different reference signals.

When the terminal device receives one reference signal, the terminal device may determine signal quality of the reference signal, and then the terminal device may determine the first resource based on the signal quality of the reference signal and the correspondence between a plurality of signal quality ranges and the N uplink resources. The N uplink resources may one-to-one correspond with the N signal quality ranges. The signal quality may be the RSRP, SINR, RSSI, RSRQ, or the like.

For example, N is 5, and the N uplink resources are a resource 1, a resource 2, a resource 3, a resource 4, and a resource 5. When the RSRP of the reference signal is in a first range (RSRP < -115 dBm), a corresponding uplink resource is the resource 1; when the RSRP of the reference signal is in a second range (-105 dBm to -115 dBm), a corresponding uplink resource is the resource 2; when the RSRP of the reference signal is in a third range (-95 dBm to -105 dBm), a corresponding uplink resource is the resource 3; when the RSRP of the reference signal is in a fourth range (-85 dBm to -95 dBm), a corresponding uplink resource is the resource 4; and when the RSRP of the reference signal is in a fifth range (RSRP > -85 dBm), a corresponding uplink resource is the resource 5. When the RSRP of the reference signal measured by the terminal device is -90 dBm, the terminal device may determine the resource 4 as the first resource. The correspondence between the N signal quality ranges and the N uplink resources may be specified in a protocol, or may be specified by the access network device.

When the terminal device receives N+M reference signals, the terminal device may determine N+M signal quality based on the N+M reference signals, and then the terminal device may determine a resource corresponding to best signal quality in the N uplink resources as the first resource. In this case, one of the N uplink resources may correspond to one or more reference signals. When one uplink resource corresponds to a plurality of reference signals, the terminal device may use an average value of signal quality of the plurality of reference signals as signal quality corresponding to the uplink resource. The signal quality may be the RSRP, SINR, RSSI, RSRQ, or the like.

When the terminal device selects the first resource based on an SSB index, the terminal device may determine the first resource based on a correspondence between the SSB index and the N uplink resources. One SSB index may correspond to one or more of the N uplink resources. When one SSB index corresponds to one uplink resource, the terminal device may determine an uplink resource corresponding to an SSB index of a received SSB as the first resource. When one SSB index corresponds to a plurality of uplink resources, the terminal device may first determine a plurality of uplink resources corresponding to an SSB index of a received SSB. Then, the terminal device may determine the first resource based on the RSRP of the SSB, or may determine the first resource based on a frequency band to which the plurality of uplink resources belong, or may determine the first resource in another manner. For details, refer to the foregoing related descriptions.

For example, N is 5, and the N uplink resources are a resource 1, a resource 2, a resource 3, a resource 4, and a resource 5. When the SSB index is 0, a corresponding uplink resource is the resource 1; when the SSB index is 1, a corresponding uplink resource is the resource 2; when the SSB index is 2, a corresponding uplink resource is the resource 3 and the resource 4; and when the SSB index is 3, a corresponding uplink resource is the resource 5. When the SSB index of an SSB received by the terminal device is 0, the terminal device may determine the resource 1 as the first resource. When the SSB index is 1, the terminal device may determine the resource 2 as the first resource. When the SSB index is 3, the terminal device may determine the resource 5 as the first resource. When the SSB index is 2, the terminal device may first determine the resource 4 and the resource 5. Then, the terminal device may determine the first resource based on an RSRP of the received SSB. It is assumed that when the RSRP of the SSB is in a first range (RSRP < -90 dBm), a corresponding uplink resource is the resource 4; and when the RSRP of the reference signal is in a second range (RSRP ≥ -90 dBm), a corresponding uplink resource is the resource 5. Therefore, when the RSRP of the SSB measured by the terminal device is -95 dBm, the terminal device may determine the resource 4 as the first resource.

Coverage of different frequency bands varies. Therefore, the terminal device may select the first resource based on a frequency band to which the N uplink resources belong. A higher frequency band indicates smaller uplink coverage of the terminal device. A lower frequency band indicates larger uplink coverage of the terminal device. Therefore, to ensure communication quality between the terminal device and the access network device, in one case, the terminal device may directly select a resource on a relatively low frequency band (that is, a resource with largest coverage). In another case, the terminal device may select the first resource based on a distance between the terminal device and the access network device. For example, when the distance between the terminal device and the access network device is short, for example, the distance is less than a specific threshold (for example, 100 meters), in this case, the terminal device is close to the access network device, signal attenuation is small, and the terminal device may select a resource on a high frequency band (that is, a resource with small coverage). When the distance between the terminal device and the access network device is long, for example, the distance is greater than a specific threshold (for example, 1000 meters), the terminal device is far from the access network device, signal attenuation is large, and the terminal device may select a resource on a low frequency band (that is, a resource with large coverage).

When there is a correspondence between the N uplink resources and the M downlink resources, the terminal device may select the first resource based on a capability of the terminal device. Specifically, the terminal device may select the first resource from the N uplink resources based on an uplink frequency band and a downlink frequency band that are supported by the terminal device.

For example, when one of the N uplink resources corresponds to one of the M downlink resources, it is assumed that N is 5, M is 4, the N uplink resources are C1, C2, C3, C4, and C5, a frequency band corresponding to C1 is n1 in Table 1, a frequency band corresponding to C2 is n3, a frequency band corresponding to C3 is n7, a frequency band corresponding to C4 is n78, and a frequency band corresponding to C5 is n79. The M downlink resources are C6, C7, C8, and C9. A frequency band corresponding to C6 is n3, a frequency band corresponding to C7 is 78, a frequency band corresponding to C8 is n78, a frequency band corresponding to C9 is n79, and a correspondence between an uplink resource and a downlink resource is {C1:C6, C2:C6, C3:C7, C4:C8, C5:C9}. The uplink frequency band and the downlink frequency band supported by the terminal device are n1, n2, n3, and n7 shown in Table 1, and n258 shown in Table 2. The terminal device may select C1, C2, and C3 to send the random access request to the access network device. However, if the terminal device selects C3 to send the random access request, the terminal device needs to receive a random access response over C7. However, the terminal device cannot use a frequency band (for example, n78) that is not supported by the terminal device. Therefore, the terminal device cannot successfully receive the random access response from the access network device. Therefore, to ensure that the terminal device can successfully receive the random access response from the access network device, the terminal device may select the uplink resource C1 and the uplink resource C2 to send the random access request.

It may be understood that the access network device does not know which uplink resource in the N uplink resources is used by the terminal device to send the random access request. Therefore, the access network device needs to monitor the N uplink resources, to ensure that the access network device can receive the random access request from the terminal device. In addition, because the N uplink resources may belong to different frequency bands, the terminal device may flexibly select an uplink resource, and different terminal devices may perform access over different uplink resources, an uplink coverage gain of the terminal device may be obtained.

403: The access network device sends a random access response to the terminal device over a second resource.

Correspondingly, the terminal device may receive the random access response (random access response, RAR) from the access network device over the second resource. The second resource may be one of the M downlink resources.

When the access network device receives the random access request from the terminal device and determines to send the random access response to the terminal device, the access network device may first select the second resource from the M downlink resources.

When there is no correspondence between the N uplink resources and the M downlink resources, the access network device may select the second resource based on a frequency band to which the M downlink resources belong, or may select the second resource based on a distance between the terminal device and the access network device. A rule for selecting the second resource from the M downlink resources by the access network device is not limited herein. Selecting the second resource by the access network device is similar to selecting the first resource by the terminal device. For details, refer to the foregoing related descriptions. Details are not described herein again.

When there is no correspondence between the N uplink resources and the M downlink resources, the terminal device does not know which downlink resource is used by the access network device to send the random access response. Therefore, the terminal device needs to receive the random access response on the M downlink resources. In addition, the N uplink resources may belong to different frequency bands, and the M downlink resources may also belong to different frequency bands. Therefore, the terminal device needs to support frequency bands corresponding to the M downlink resources, to successfully receive the random access response from the access network device. This raises a high requirement on the capability of the terminal device.

When there is a correspondence between the N uplink resources and the M downlink resources, and one of the N uplink resources corresponds to a plurality of downlink resources in the M downlink resources, the access network device may determine a downlink resource corresponding to the first resource in the N uplink resources, to obtain K downlink resources. K is an integer greater than or equal to 2 and less than or equal to M. Then, the access network device may select the second resource from the K downlink resources. The access network device may select the second resource based on utilization of the K downlink resources, or may select the second resource based on a frequency band to which the K downlink resources belong, or may select the second resource based on a distance between the terminal device and the access network device. Selecting the second resource by the access network device from the K downlink resources is similar to (that is, the same as or similar to) selecting the first resource by the terminal device. For details, refer to the foregoing related descriptions.

When the access network device selects the second resource based on the utilization of the K downlink resources, the access network device may determine a resource with lowest utilization in the K downlink resources as the second resource. For example, it is assumed that K is 3, and the K downlink resources may include a downlink resource 1, a downlink resource 2, and a downlink resource 3. When the access network device receives the random access request from the terminal device, the downlink resource 1 and the downlink resource 2 are already used to send random access responses to a plurality of other terminal devices served by the access network device, and the downlink resource 3 is not used or is less frequently used to send random access responses to other terminal devices. In this case, the downlink resource 1 and the downlink resource 2 have few idle resources, and the downlink resource 3 has many idle resources, that is, utilization of the downlink resource 3 is lower. Therefore, the access network device may determine the downlink resource 3 as the second resource, and send the random access response to the terminal device over the downlink resource 3, so that all downlink resources can be used in a balanced manner.

When there is a correspondence between the N uplink resources and the M downlink resources, and one of the N uplink resources corresponds to one of the M downlink resources, the access network device may determine a downlink resource corresponding to the first resource in the N uplink resources, to obtain the second resource. For example, it is assumed that N is 3, M is 2, the N uplink resources include an uplink resource 1, an uplink resource 2, and an uplink resource 3, and the M downlink resources include a downlink resource 1 and a downlink resource 2. The correspondence between an uplink resource and a downlink resource may be that the uplink resource 1 corresponds to the downlink resource 1, the uplink resource 2 also corresponds to the downlink resource 1, and the uplink resource 3 corresponds to the downlink resource 2. Therefore, when the terminal device sends the random access request to the access network device over the uplink resource 3 (namely, the first resource), the access network device may determine the downlink resource 2 corresponding to the uplink resource 3 as the second resource, and then the access network device may send the random access response to the terminal device over the downlink resource 2. It should be understood that one of the M downlink resources may correspond to a plurality of uplink resources in the N uplink resources.

When there is a correspondence between the N uplink resources and the M downlink resources, the terminal device may determine, based on the correspondence, a downlink resource corresponding to the first resource. Then, the terminal device needs to receive (monitor) the random access response from the access network device only on the downlink resource corresponding to the first resource. Therefore, when the first resource corresponds to only a part of the M downlink resources, the terminal device does not need to monitor the M downlink resources, so that average power consumption of the terminal device can be reduced. It should be understood that the random access response may carry or include an identifier of the terminal device.

After the terminal device successfully performs random access (for example, receives the RAR from the access network device within a specific time window (for example, within 5 seconds after sending the random access request), and then receives a message such as a contention resolution message from the access network device), the terminal device may send the capability information to the access network device. Specifically, the terminal device may directly send the capability information of the terminal device to the access network device, or may send the capability information to the access network device when receiving a capability information request from the access network device. Correspondingly, the access network device may receive the capability information from the terminal device. The capability information may indicate a frequency band set supported by the terminal device and information about a bandwidth corresponding to each frequency band in the frequency band set.

The capability information may include L frequency band sets and information about a bandwidth corresponding to a frequency band included in the L frequency band sets. The L frequency band sets may include an uplink frequency band set and a downlink frequency band set supported by the terminal device, and L is a positive integer greater than or equal to 1.

For example, it is assumed that L is 4, the capability information may include an uplink frequency band set 1 (UL group set 1): n5, n8, and n28, an uplink frequency band set 2 (UL group set 2): n1 and n3, a downlink frequency band set 1 (DL group set 1): n1, n3, and n50, and a downlink frequency band set 2 (DL group set 2): n79 and n257. The uplink frequency band set 1 includes uplink frequency bands corresponding to the frequency band numbers n5, n8, and n28 in Table 1 (for example, an uplink frequency band corresponding to n5 may be 824 MHz to 849 MHz), the uplink frequency band set 2 includes uplink frequency bands corresponding to the frequency bands n1 and n3 in Table 1, the downlink frequency band set 1 includes downlink frequency bands corresponding to the frequency bands n1, n3, and n50 in Table 1, and the downlink frequency band set 2 includes a downlink frequency band corresponding to the frequency band number n79 in Table 1 and a downlink frequency band corresponding to the frequency band number n257 in Table 2.

For the uplink frequency band set 1, the terminal device may support two 5 MHz bandwidths on the uplink frequency band of n28 (that is, support two carriers, each with a 5 MHz bandwidth), which may be expressed as n28: 2×5, one 15 MHz bandwidth on the uplink frequency band of n5, which may be expressed as n5: 15, and two 10 MHz bandwidths on the uplink frequency band of n8, which may be expressed as n8: 2×10. For another example, for the downlink frequency band set 1, the terminal device may support two 10 MHz bandwidths on the downlink frequency band of n50, which may be expressed as n50: 2×10, two 20 MHz bandwidths on the downlink frequency band of n1, which may be expressed as n1: 2×20, and two 15 MHz bandwidths on the downlink frequency band of n3, which may be expressed as n3: 2×15. Each frequency band in the uplink frequency band set 2 and the downlink frequency band set 2 also has similar bandwidth information. Refer to the foregoing descriptions. It should be understood that the indicated bandwidth may be a maximum bandwidth supported by the terminal device, and the terminal device may support another bandwidth that is less than or equal to the maximum bandwidth.

The capability information of the terminal device may also be expressed as a combination of a plurality of different frequency bands, for example, n78-n258 or n7-n257. Refer to Table 1 and Table 2, n7, n78, n257, and n258 may be frequency band numbers (indexes). n78-n258 and n7-n257 indicate that the terminal device can support use of carriers on the frequency bands n78 and n258 at the same time, or support use of carriers on the frequency bands n7 and n257 at the same time. However, carriers on n78 and n7 or carriers on n78 and n257 cannot be used at the same time. In addition to the supported frequency band combination, the capability information may further include information such as a quantity of carriers, a bandwidth, and the like that are supported by the terminal device, and may be indicated by using a corresponding carrier level. For example, a carrier level A in FR1 may indicate that one carrier is supported, and a bandwidth of the carrier is less than a maximum bandwidth of the carrier. A carrier level M in FR2 may indicate that eight carriers are supported, and a total bandwidth of the carriers is less than 800 MHz. n78A-n258M may indicate that the terminal device may support one carrier on the frequency band n78 and eight carriers on the frequency band n258, and a total bandwidth of the eight carriers needs to be less than 800 MHz. The capability information may further include a maximum uplink/downlink bandwidth, a modulation and coding scheme, a subcarrier spacing, a quantity of uplink carriers, a quantity of downlink carriers, and the like that are supported by the terminal device. Content included in the capability information and an expression form are not limited herein.

After the access network device receives the capability information reported by the terminal device, when the terminal device has transmission of uplink data and/or downlink data, the access network device may flexibly allocate (schedule) an uplink resource and a downlink resource to the terminal device based on the capability reported by the terminal device. The uplink resource and the downlink resource are used for data transmission.

When the terminal device has downlink data, the access network device may allocate a third resource to the terminal device based on the capability information and a downlink data amount. The third resource may include one or more resources, and the third resource may belong to a same frequency band or different frequency bands. For example, the third resource may include a resource of the frequency band n1, a resource of the frequency band n5, and a resource of the frequency band n28. The access network device may transmit the downlink data to the terminal device over the third resource.

The access network device may maintain two transmission resource pools, that is, an uplink resource pool and a downlink resource pool. The access network device may select the third resource from the downlink resource pool. The uplink resource pool may include uplink resources of all the cells within the coverage of the access network device, and the downlink resource pool may include downlink resources of all the cells within the coverage of the access network device. The uplink resource pool and downlink resource pool may be scheduled independently. When the terminal device has uplink data, the access network device may allocate an uplink resource to the terminal device from idle resources in the uplink resource pool, so that the terminal device transmits the uplink data. Alternatively, when the terminal device has downlink data, the access network device may allocate a downlink resource to the terminal device from idle resources in the downlink resource pool, so that the terminal device receives the downlink data. Optionally, a resource that can be allocated to the terminal device may further include a resource of a neighboring (that is, geographically neighboring) access network device. When the terminal device is located within coverage of the neighboring access network device, the access network device may also allocate a resource of the neighboring access network device to the terminal device, so that the terminal device can increase a data transmission rate of the terminal device.

For example, it is assumed that the capability information may include an uplink frequency band set 1 (UL group set 1): n5, n8, and n28, an uplink frequency band set 2 (UL group set 2): n1 and n3, a downlink frequency band set 1 (DL group set 1): n1, n3, and n50, and a downlink frequency band set 2 (DL group set 2): n79 and n257. In addition, for the downlink frequency band set 1, the terminal device may support two 20 MHz bandwidths of the downlink frequency band of n1, two 15 MHz bandwidths of the downlink frequency band of n3, and two 10 MHz bandwidths of the downlink frequency band of n50. For the downlink frequency band set 2, the terminal device may support four 50 MHz bandwidths of the downlink frequency band of n79, and two 200 MHz bandwidths of the downlink frequency band of n257.

Downlink resources (that is, idle resources) that can be allocated by the access network device may include all downlink resources of the frequency bands n1, n2, n3, and n257. Therefore, when a downlink data amount is small (for example, 10 GB data), the access network device may allocate one or two carriers, each with a 15 MHz bandwidth, on the frequency band n3 to the terminal device, or may allocate one carrier with a 20 MHz bandwidth on the frequency band n1 to the terminal device, or may allocate one carrier with a 10 MHz bandwidth on the frequency band n3 and one carrier with a 15 MHz bandwidth on the frequency band n1 to the terminal device. When a downlink data amount is large (for example, 10 TB data), the access network device may allocate one or two carriers, each with a 200 MHz bandwidth, on the frequency band n257 to the terminal device. It may be understood that downlink resources that can be allocated by the access network device may also be a part or all of downlink resources of the frequency bands n1, n2, n3, and n257. This depends on resources planned for the access network device during network planning. Aunit of a specific resource allocated by the access network device to the terminal device may be an activated BWP, a subcarrier, a slot, a mini-slot (mini-slot), or the like. It should be understood that a resource allocated by the access network device to the terminal device for data transmission may be allocated from currently allocable resources (namely, idle resources).

After the access network device allocates the third resource to the terminal device, the access network device may send information about the third resource to the terminal device. Correspondingly, the terminal device may receive the information about the third resource from the access network device. Then, the terminal device may receive downlink data from the access network device over the third resource.

When the terminal device has uplink data, the terminal device may send, to the access network device, a resource allocation request used to request an uplink resource. Correspondingly, the access network device may receive the resource allocation request from the terminal device. The resource allocation request may include an uplink data amount.

The access network device may allocate a fourth resource to the terminal device based on the capability information and the uplink data amount. The fourth resource may include one or more resources, and the fourth resource may belong to a same frequency band or different frequency bands. A frequency band corresponding to the third resource may be the same as or different from a frequency band corresponding to the fourth resource. Allocating the fourth resource by the access network device to the terminal device is similar to allocating the third resource. For details, refer to related descriptions of allocating the third resource. Details are not described herein again. However, it should be noted that a frequency band corresponding to the third resource may be the same as or different from a frequency band corresponding to the fourth resource. For example, the third resource allocated by the access network device to the terminal device may be a downlink resource on the frequency band n3, and the fourth resource may be an uplink resource on the frequency band n3, or the fourth resource may be an uplink resource on the frequency band n1 and an uplink resource on the frequency band n5.

It can be learned that, in this embodiment of the present invention, an uplink resource (carrier) and a downlink resource (carrier) of a cell within the coverage of the access network device are separately decoupled, and an uplink resource of a cell may not correspond to a downlink resource of the cell. Uplink resources (carriers) and downlink resources of all cells within the coverage of the access network device may independently form an uplink spectrum resource pool and a downlink spectrum resource pool. During resource scheduling, the access network device may select an appropriate resource (a carrier or a carrier combination) from the uplink resource pool and the downlink resource pool based on a service requirement of the terminal device and schedule the resource to the terminal device.

In addition, the uplink resources (carriers) and the downlink resources (carriers) are separately decoupled, so that a requirement on a carrier capability of the terminal device can be further reduced.

For example, the terminal device may support a 20 MHz carrier on the 700 MHz frequency band, a 50 MHz carrier on the 3.5 GHz frequency band, and a 50 MHz carrier on the 4.9 GHz frequency band over the uplink, and may also support a 20 MHz carrier on the 700 MHz frequency band, a 50 MHz carrier on the 3.5 GHz frequency band, and a 50 MHz carrier on the 4.9 GHz frequency band over the downlink. However, the terminal device supports a maximum of two downlink carriers and two uplink carriers. Currently, in a conventional manner, when the terminal device uses uplink carriers of 700 MHz 20 MHz + 3.5 GHz 50 MHz over the uplink, the terminal device needs to use downlink carriers corresponding to the uplink carriers over the downlink, that is, the terminal device uses downlink carriers of 700 MHz 20 MHz + 3.5 GHz 50 MHz over the downlink. In this case, if the terminal device wants to increase a downlink bandwidth and ensure uplink coverage, the terminal device needs to support three carriers over the uplink and the downlink, and an uplink carrier and a downlink carrier of 4.9 GHz 50 MHz are to be added. However, in this embodiment of the present invention, the terminal device may use downlink carriers of 4.9 GHz 50 MHz + 3.5 GHz 50 MHz rather than downlink carriers of 700 MHz 20 MHz over the downlink, so that the downlink bandwidth can be increased. The terminal device may use uplink carriers of 700 MHz 20 MHz + 3.5 GHz 50 MHz over the uplink, so that the uplink coverage of the terminal device can be ensured. In this case, the terminal device may not need to support three carriers over the uplink and downlink. It can be learned that in this embodiment of the present invention, there may be no correspondence between an uplink carrier and a downlink carrier that are used by the terminal device, so that various combinations of uplink/downlink carriers can be more flexibly used, reducing the requirement on the carrier capability of the terminal device, and further reducing costs of the terminal device.

It should be understood that when allocating the uplink resource and the downlink resource used for data transmission, the access network device may further consider quality of an uplink channel and quality of a downlink channel, and may select an appropriate modulation and coding scheme (modulation and coding scheme, MCS) and the like for the terminal device based on the quality of the uplink/downlink channel.

After the access network device allocates the fourth resource to the terminal device, the access network device may send information about the fourth resource to the terminal device. Correspondingly, the terminal device may receive the information about the fourth resource from the access network device. Then, the terminal device may transmit uplink data to the access network device over the fourth resource. The access network device may receive the uplink data from the terminal device over the fourth resource.

The access network device may send, to the terminal device via downlink control information, allocation indication information indicating the third resource and the fourth resource (that is, the information about the third resource and the information about the fourth resource), to notify the terminal device of the configured third resource and the configured fourth resource. The access network device may send the allocation indication information over a downlink control channel, for example, a physical downlink control channel or an enhanced physical downlink control channel. Optionally, the access network device may send the allocation indication information to the terminal device on a downlink data channel, for example, a physical downlink shared channel. For example, the allocation indication information may be sent to the terminal device via dedicated radio resource control signaling.

The access network device may also allocate an uplink/downlink resource to the terminal device based on a service requirement of the terminal device. Specifically, the access network device may allocate the uplink/downlink resource to the terminal device based on a mobility feature, an uplink data amount, a downlink data amount, and the like of the terminal device. The mobility feature of the terminal device is a movement speed, a movement range, and the like of the terminal device. When the movement range of the terminal device is large, the access network device may allocate a resource of a low frequency band to the terminal device for data transmission, so that quality of communication between the terminal device and the access network device can be ensured, and a wide coverage requirement is provided for the terminal device.

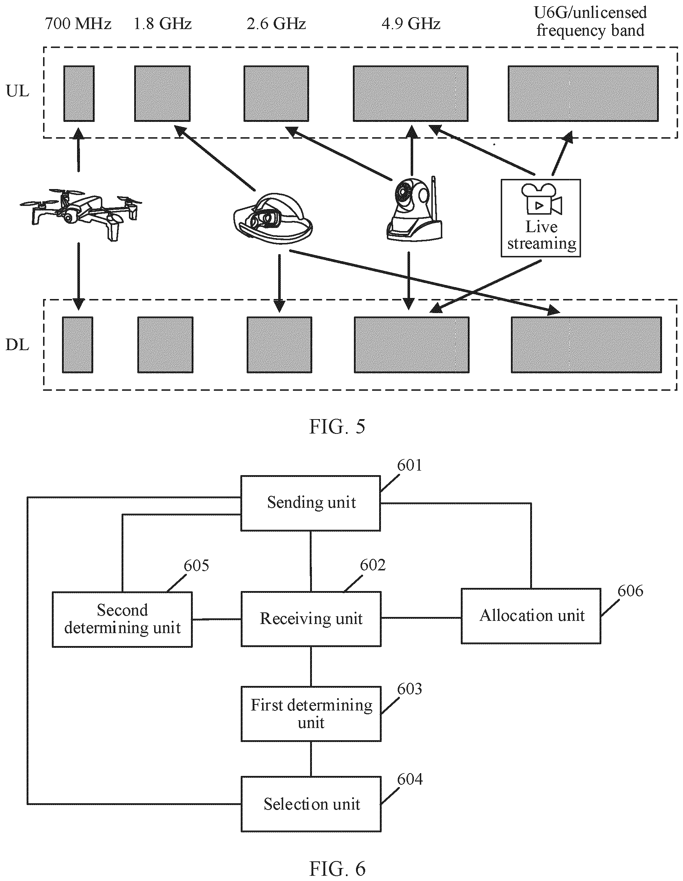

Refer to FIG. 5 for an example. FIG. 5 is a diagram of resource allocation according to an embodiment of the present invention. As shown in FIG. 5, resources of an access network device may be divided into an uplink resource (UL) pool and a downlink resource (DL) pool. A higher frequency band (such as a 4.9 GHz frequency band, a U6G frequency band, and the like) indicates that more resources can be allocated. A lower frequency band (such as 700 MHz, 1.8 GHz, and the like) indicates that fewer resources can be allocated.

For example, for a communication service of a terminal device such as an uncrewed aerial vehicle, because the uncrewed aerial vehicle has a large movement range, a wide coverage requirement, and a small uplink/downlink data amount, only a 1 MHz bandwidth is needed to meet the service requirement. Therefore, a resource of a low frequency band, for example, a resource of the 700 MHz frequency band, may be allocated to the uncrewed aerial vehicle. For a communication service such as VR/AR, and the like, a movement range is small, but a downlink data amount is large, and an uplink data amount is small. Therefore, an uplink resource of the 1.8 GHz frequency band, and downlink resources of the 2.6 GHz frequency band and the U6G/unlicensed frequency band may be allocated for the communication service. There are a large quantity of resources in the U6G/unlicensed frequency band. Therefore, a large bandwidth (for example, 400 MHz) may be allocated to the terminal device, to ensure a transmission rate of the terminal device, to facilitate receiving downlink data by the terminal device. For a communication service of a terminal device such as an IP camera, a movement range of the communication service is small, a requirement for a downlink resource is small (for example, 50 MHz), and a large quantity of uplink resources (for example, a bandwidth greater than 300 MHz) are needed to ensure video data uploading. Therefore, a downlink resource of the 4.9 GHz frequency band and uplink resources of the 2.6 GHz frequency band and the 4.9 GHz frequency band may be allocated for the communication service. However, for a communication service such as live streaming, a requirement for an uplink resource is high, and a bandwidth of 400 MHz may be needed over the uplink, and a requirement for a downlink resource is low, and a bandwidth of 50 MHz may be needed over the downlink. Therefore, uplink resources of the 4.9 GHz frequency band and the U6G/unlicensed frequency band may be allocated for the communication service, and a downlink resource of the 4.9 GHz frequency band may be allocated over the downlink.

It can be learned that the access network device may support unified scheduling of all available frequency band resources, and flexibly allocate a resource to the terminal device based on a service requirement of the terminal device, so that high uplink traffic and high downlink traffic of the terminal device can be ensured, and spectrum advantages (coverage, bandwidth, and the like) of different frequency bands are fully utilized, to maximize resource utilization.

It should be noted that currently, a cell may have a corresponding control channel and a corresponding data channel. Control channels and data channels of different cells are configured independently. The control channel is mainly used for signaling transmission, and the data channel is mainly used for data transmission. In this embodiment of the present invention, a control channel and a data channel may be decoupled separately. Control channels of all cells within coverage of the access network device may be uniformly configured, and all the cells may share a same control channel. Data channels of all the cells may be independently configured, but data channel resources are uniformly allocated by the access network device. The access network device may configure that the control channel is on a low frequency, to form a continuous wide coverage network, so that a requirement for terminal device movement in a large range can be met, reducing times of measurement switching of the terminal device, and further reducing control channel overheads. For example, in both cases in which the terminal device is close to and far from the access network device, it may be uniformly configured that the control channel is on a low frequency. When the terminal device is close to the access network device, the access network device may allocate a data channel resource of a high frequency band to the terminal device, so that the terminal device transmits uplink data and receives downlink data. When the terminal device moves from an area close to the access network device to an area far from the access network device, the access network device may reallocate a data channel resource of a low frequency band to the terminal device, to ensure continuity of data transmission and avoid data plane switching of the terminal device (that is, switching from a data channel of a cell to a data channel of another cell), so that the terminal device can successfully transmit uplink data and receive downlink data. It can be learned that, through uniformly configuring that the control channel is on a low frequency, and flexibly allocating data channel resources to the terminal device, control channel overheads and interruption due to data plane switching can be reduced.

In this embodiment of the present invention, the access network device may schedule a plurality of uplink carriers (resources) and downlink carriers in a unified manner, and the uplink carriers and the downlink carriers are separately decoupled. The access network device may send information about the plurality of uplink resources and information about the plurality of downlink resources to the terminal device. The information about the plurality of uplink resources and the information about the plurality of downlink resources may be information about initial uplink resources and initial downlink resources of a plurality of cells within the coverage of the access network device. Then, the terminal device may flexibly send a random access request over one of the uplink resources, and the access network device may flexibly send a random access response over one of the downlink resources, without being limited to an uplink resource and a downlink resource in a single cell, improving system resource utilization.

Based on the foregoing network architecture, refer to FIG. 6. FIG. 6 is a diagram of a structure of a communication apparatus according to an embodiment of the present invention. The communication apparatus may be an access network device or a module in the access network device. As shown in FIG. 6, the communication apparatus may include:
a sending unit 601, configured to send resource information to a terminal device, where the resource information includes information about N uplink resources and information about M downlink resources, N and M are integers greater than or equal to 2, the N uplink resources belong to one or more frequency bands, the M downlink resources belong to one or more frequency bands, and a frequency band to which the N uplink resources belong is the same as or different from a frequency band to which the M downlink resources belong; and
a receiving unit 602, configured to receive a random access request from the terminal device over a first resource, where the first resource is one of the N uplink resources.

The sending unit 601 is further configured to send a random access response to the terminal device over a second resource, where the second resource is one of the M downlink resources.

In an embodiment, the sending unit 601 is further configured to send N reference signals to the terminal device, where the N reference signals one-to-one correspond with the N uplink resources.

In an embodiment, one of the N uplink resources corresponds to a plurality of downlink resources in the M downlink resources, and the apparatus may further include:
a first determining unit 603, configured to determine a downlink resource corresponding to the first resource in the N uplink resources, to obtain K downlink resources, where K is an integer greater than or equal to 2 and less than or equal to M; and
a selection unit 604, configured to select the second resource from the K downlink resources.

In an embodiment, that the selection unit 604 selects the second resource from the K downlink resources includes: determining a resource with lowest utilization in the K downlink resources as the second resource.

In an embodiment, one of the N uplink resources corresponds to one of the M downlink resources, and the apparatus may further include:
a second determining unit 605, configured to determine a downlink resource corresponding to the first resource in the N uplink resources, to obtain the second resource.

In an embodiment, the receiving unit 602 is further configured to receive capability information from the terminal device, where the capability information includes L frequency band sets and information about a bandwidth corresponding to a frequency band included in the L frequency band sets, and L is a positive integer greater than or equal to 1.

The apparatus may further include:
an allocation unit 606, configured to allocate a third resource to the terminal device based on the capability information and a downlink data amount, where the third resource includes one or more resources, and the third resource belongs to a same frequency band or different frequency bands.

The sending unit 601 is further configured to send information about the third resource to the terminal device, where the third resource is used by the access network device for downlink data transmission.

In an embodiment, the receiving unit 602 is further configured to receive a resource allocation request from the terminal device, where the resource allocation request includes an uplink data amount.

The allocation unit 606 is further configured to allocate a fourth resource to the terminal device based on the capability information and the uplink data amount, where the fourth resource includes one or more resources, the fourth resource belongs to a same frequency band or different frequency bands, and a frequency band corresponding to the third resource is the same as or different from a frequency band corresponding to the fourth resource.

The sending unit 601 is further configured to send information about the fourth resource to the terminal device, where the fourth resource is used by the access network device for uplink data reception.

The first determining unit 603 and the second determining unit 605 may be collectively referred to as a determining unit. For more detailed descriptions of the sending unit 601, the receiving unit 602, the first determining unit 603, the selection unit 604, the second determining unit 605, and the allocation unit 606, directly refer to related descriptions of the access network device in the method embodiment shown in FIG. 4. Details are not described herein again.

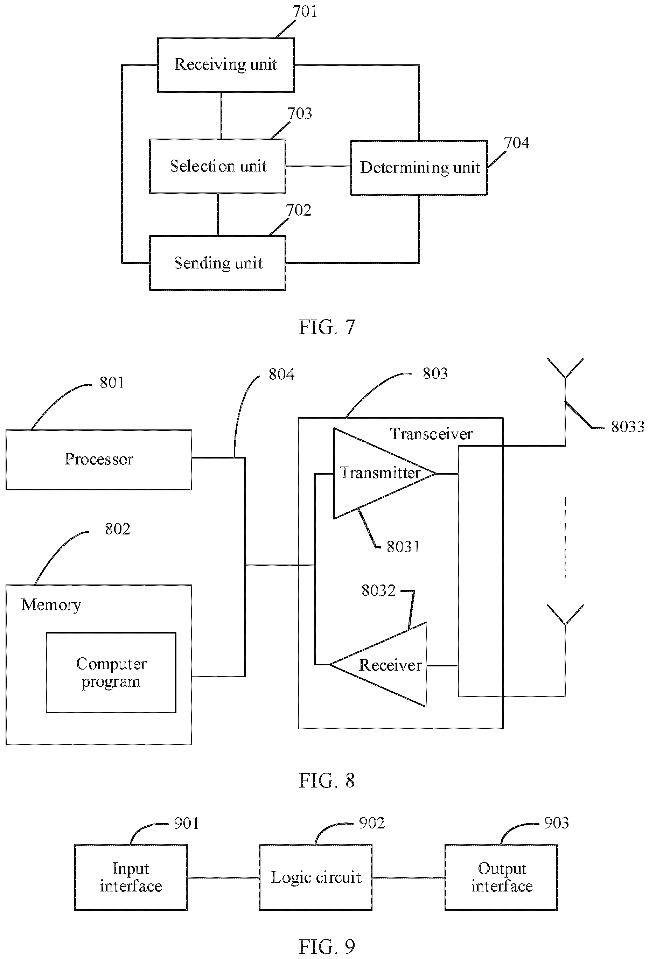

Based on the foregoing network architecture, refer to FIG. 7. FIG. 7 is a diagram of a structure of another communication apparatus according to an embodiment of the present invention. The communication apparatus may be a terminal device, or may be a module in the terminal device. As shown in FIG. 7, the communication apparatus may include:
a receiving unit 701, configured to receive resource information from an access network device, where the resource information includes information about N uplink resources and information about M downlink resources, N and M are integers greater than or equal to 2, the N uplink resources belong to one or more frequency bands, the M downlink resources belong to one or more frequency bands, and a frequency band to which the N uplink resources belong is the same as or different from a frequency band to which the M downlink resources belong; and
a sending unit 702, configured to send a random access request to the access network device over a first resource, where the first resource is one of the N uplink resources.

The receiving unit 701 is further configured to receive a random access response from the access network device over a second resource, where the second resource is one of the M downlink resources.

In a possible implementation, the apparatus may further include:
a selection unit 703, configured to select the first resource from the N uplink resources.

In a possible implementation, the selection unit 703 is specifically configured to select the first resource from the N uplink resources based on a capability of the terminal device.

In a possible implementation, the receiving unit 701 is further configured to receive N reference signals from the access network device, where the N reference signals one-to-one correspond with the N uplink resources.

The apparatus may further include:
a determining unit 704, configured to determine N pieces of signal quality based on the N reference signals, where the N reference signals one-to-one correspond with the N pieces of signal quality.

That the selection unit 703 selects the first resource from the N uplink resources includes:
determining a resource corresponding to best signal quality in the N uplink resources as the first resource.

In a possible implementation, one of the N uplink resources corresponds to a plurality of downlink resources in the M downlink resources, and the determining unit 704 is further configured to determine a downlink resource corresponding to the first resource in the N uplink resources, to obtain K downlink resources, where the K downlink resources include the second resource, and K is an integer greater than or equal to 2 and less than or equal to M.

That the receiving unit 701 receives the random access response from the access network device over the second resource includes:
receiving the random access response from the access network device over the K downlink resources.

In a possible implementation, one of the N uplink resources corresponds to one of the M downlink resources, and the determining unit 704 is further configured to determine a downlink resource corresponding to the first resource in the N uplink resources, to obtain the second resource.

In a possible implementation, the sending unit 702 is further configured to send capability information to the access network device, where the capability information includes L frequency band sets and information about a bandwidth corresponding to a frequency band included in the L frequency band sets, and L is a positive integer greater than or equal to 1.

The receiving unit 701 is further configured to receive information about a third resource from the access network device, where the third resource includes one or more resources, the third resource belongs to a same frequency band or different frequency bands, and the third resource is used by the terminal device to receive downlink data.

In a possible implementation, the sending unit 702 is further configured to send a resource allocation request to the access network device, where the resource allocation request includes an uplink data amount.

The receiving unit 701 is further configured to receive information about a fourth resource from the access network device, where the fourth resource includes one or more resources, the fourth resource belongs to a same frequency band or different frequency bands, and the fourth resource is used by the terminal device to transmit uplink data.

For more detailed descriptions of the receiving unit 701, the sending unit 702, the selection unit 703, and the determining unit 704, directly refer to related descriptions of the terminal device in the method embodiment shown in FIG. 4. Details are not described herein again.

Based on the foregoing network architecture, refer to FIG. 8. FIG. 8 is a diagram of a structure of still another communication apparatus according to an embodiment of the present invention. As shown in FIG. 8, the communication apparatus may include a processor 801, a memory 802, a transceiver 803, and a bus 804. The memory 802 may exist independently, and may be connected to the processor 801 through the bus 804. Alternatively, the memory 802 and the processor 801 may be integrated together. The bus 804 is configured to implement connections between these components. In one case, as shown in FIG. 8, the transceiver 803 may include a transmitter 8031, a receiver 8032, and an antenna 8033. In another case, the transceiver 803 may include a transmitter (that is, an output interface) and a receiver (that is, an input interface). The transmitter may include a transmitter machine and an antenna, and the receiver may include a receiver machine and an antenna.

In an embodiment, the communication apparatus may be an access network device or a module (for example, a chip) in the access network device. When a computer program stored in the memory 802 is executed, the processor 801 is configured to control the sending unit 601 and the receiving unit 602 to perform the operations performed in the foregoing embodiments. The processor 801 is further configured to perform the operations performed by the first determining unit 603, the selection unit 604, the second determining unit 605, and the allocation unit 606. The transceiver 803 is configured to perform the operations performed by the sending unit 601 and the receiving unit 602 in the foregoing embodiments. The access network device or the module in the access network device may be further configured to perform the method performed by the access network device in the method embodiment in FIG. 4. Details are not described herein again.

In an embodiment, the communication apparatus may be a terminal device or a module (for example, a chip) in the terminal device. When a computer program stored in the memory 802 is executed, the processor 801 is configured to control the receiving unit 701 and the sending unit 702 to perform the operations performed in the foregoing embodiments. The processor 801 is further configured to perform the operations performed by the selection unit 703 and the determining unit 704. The transceiver 803 is configured to perform the operations performed by the receiving unit 701 and the sending unit 702 in the foregoing embodiments. The terminal device or the module in the terminal device may be further configured to perform the method performed by the terminal device in the method embodiment in FIG. 4. Details are not described herein again.

Based on the foregoing network architecture, refer to FIG. 9. FIG. 9 is a diagram of a structure of still another communication apparatus according to an embodiment of the present invention. As shown in FIG. 9, the communication apparatus may include an input interface 901, a logic circuit 902, and an output interface 903. The input interface 901 is connected to the output interface 903 through the logic circuit 902. The input interface 901 is configured to receive information from another communication apparatus, and the output interface 903 is configured to: output, schedule, or send information to another communication apparatus. The logic circuit 902 is configured to perform an operation other than the operations of the input interface 901 and the output interface 903, for example, implement functions implemented by the processor 801 in the foregoing embodiment. The communication apparatus may be a terminal device or a module in the terminal device, or may be an access network device or a module in the access network device. For more detailed descriptions of the input interface 901, the logic circuit 902, and the output interface 903, directly refer to related descriptions of the terminal device or the access network device in the foregoing method embodiments. Details are not described herein again.

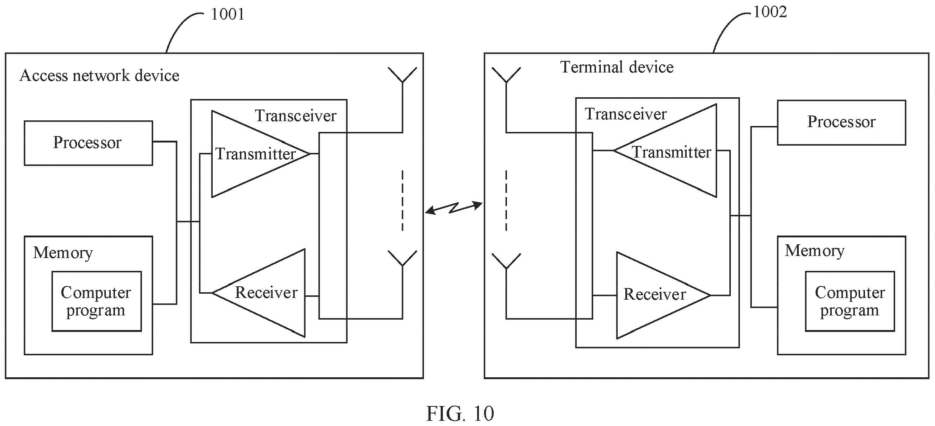

Based on the foregoing network architecture, refer to FIG. 10. FIG. 10 is a diagram of a structure of a communication system according to an embodiment of the present invention. As shown in FIG. 10, the communication system may include an access network device 1001 and a terminal device 1002. For detailed descriptions, refer to the communication method shown in FIG. 4.

An embodiment of the present invention further discloses a computer-readable storage medium. The computer-readable storage medium stores instructions, and when the instructions are executed, the method in the foregoing method embodiment is performed.

An embodiment of the present invention further discloses a computer program product including instructions. When the instructions are executed, the method in the foregoing method embodiment is performed.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A communication method, comprising:
sending resource information to a terminal device, wherein the resource information comprises information about N uplink resources and information about M downlink resources, N and M are integers greater than or equal to 2, the N uplink resources belong to one or more frequency bands, the M downlink resources belong to one or more frequency bands, and a frequency band to which the N uplink resources belong is the same as or different from a frequency band to which the M downlink resources belong;
receiving a random access request from the terminal device over a first resource, wherein the first resource is one of the N uplink resources; and
sending a random access response to the terminal device over a second resource, wherein the second resource is one of the M downlink resources.

2. The method according to claim 1, wherein one of the N uplink resources corresponds to a plurality of downlink resources in the M downlink resources, and the method further comprises:
determining a downlink resource corresponding to the first resource in the N uplink resources, to obtain K downlink resources, wherein K is an integer greater than or equal to 2 and less than or equal to M; and
selecting the second resource from the K downlink resources.

3. The method according to claim 2, wherein the selecting the second resource from the K downlink resources comprises:
determining a resource with lowest utilization in the K downlink resources as the second resource.

4. The method according to claim 1, wherein one of the N uplink resources corresponds to one of the M downlink resources, and the method further comprises:
determining a downlink resource corresponding to the first resource in the N uplink resources, to obtain the second resource.

5. The method according to any one of claims 1 to 4, wherein the method further comprises:
receiving capability information from the terminal device, wherein the capability information comprises L frequency band sets and information about a bandwidth corresponding to a frequency band comprised in the L frequency band sets, and L is a positive integer greater than or equal to 1;
allocating a third resource to the terminal device based on the capability information and a downlink data amount, wherein the third resource comprises one or more resources, and the third resource belongs to a same frequency band or different frequency bands; and
sending information about the third resource to the terminal device, wherein the third resource is used by an access network device for downlink data transmission.

6. The method according to claim 5, wherein the method further comprises:
receiving a resource allocation request from the terminal device, wherein the resource allocation request comprises an uplink data amount;
allocating a fourth resource to the terminal device based on the capability information and the uplink data amount, wherein the fourth resource comprises one or more resources, the fourth resource belongs to a same frequency band or different frequency bands, and a frequency band corresponding to the third resource is the same as or different from a frequency band corresponding to the fourth resource; and
sending information about the fourth resource to the terminal device, wherein the fourth resource is used by the access network device for uplink data reception.

7. A communication method, comprising:
receiving resource information from an access network device, wherein the resource information comprises information about N uplink resources and information about M downlink resources, N and M are integers greater than or equal to 2, the N uplink resources belong to one or more frequency bands, the M downlink resources belong to one or more frequency bands, and a frequency band to which the N uplink resources belong is the same as or different from a frequency band to which the M downlink resources belong;
sending a random access request to the access network device over a first resource, wherein the first resource is one of the N uplink resources; and
receiving a random access response from the access network device over a second resource, wherein the second resource is one of the M downlink resources.

8. The method according to claim 7, wherein the method further comprises:
selecting the first resource from the N uplink resources.

9. The method according to claim 8, wherein the selecting the first resource from the N uplink resources comprises:
selecting the first resource from the N uplink resources based on a capability of a terminal device.

10. The method according to any one of claims 7 to 9, wherein one of the N uplink resources corresponds to a plurality of downlink resources in the M downlink resources, and the method further comprises:
determining a downlink resource corresponding to the first resource in the N uplink resources, to obtain K downlink resources, wherein the K downlink resources comprise the second resource, and K is an integer greater than or equal to 2 and less than or equal to M; and
the receiving a random access response from the access network device over a second resource comprises:
receiving the random access response from the access network device over the K downlink resources.

11. The method according to claims 7 to 9, wherein one of the N uplink resources corresponds to one of the M downlink resources, and the method further comprises:
determining a downlink resource corresponding to the first resource in the N uplink resources, to obtain the second resource.

12. The method according to any one of claims 7 to 11, wherein the method further comprises:
sending capability information to the access network device, wherein the capability information comprises L frequency band sets and information about a bandwidth corresponding to a frequency band comprised in the L frequency band sets, and L is a positive integer greater than or equal to 1; and
receiving information about a third resource from the access network device, wherein the third resource comprises one or more resources, the third resource belongs to a same frequency band or different frequency bands, and the third resource is used by the terminal device to receive downlink data.

13. The method according to claim 12, wherein the method further comprises:
sending a resource allocation request to the access network device, wherein the resource allocation request comprises an uplink data amount; and
receiving information about a fourth resource from the access network device, wherein the fourth resource comprises one or more resources, the fourth resource belongs to a same frequency band or different frequency bands, and the fourth resource is used by the terminal device to transmit uplink data.

14. A communication apparatus, comprising:
a sending unit, configured to send resource information to a terminal device, wherein the resource information comprises information about N uplink resources and information about M downlink resources, N and M are integers greater than or equal to 2, the N uplink resources belong to one or more frequency bands, the M downlink resources belong to one or more frequency bands, and a frequency band to which the N uplink resources belong is the same as or different from a frequency band to which the M downlink resources belong; and
a receiving unit, configured to receive a random access request from the terminal device over a first resource, wherein the first resource is one of the N uplink resources; and
the sending unit is further configured to send a random access response to the terminal device over a second resource, wherein the second resource is one of the M downlink resources.

15. The apparatus according to claim 14, wherein one of the N uplink resources corresponds to a plurality of downlink resources in the M downlink resources, and the apparatus further comprises:
a first determining unit, configured to determine a downlink resource corresponding to the first resource in the N uplink resources, to obtain K downlink resources, wherein K is an integer greater than or equal to 2 and less than or equal to M; and
a selection unit, configured to select the second resource from the K downlink resources.

16. The apparatus according to claim 15, wherein the selection unit is specifically configured to determine a resource with lowest utilization in the K downlink resources as the second resource.

17. The apparatus according to claim 14, wherein one of the N uplink resources corresponds to one of the M downlink resources, and the apparatus further comprises:
a second determining unit, configured to determine a downlink resource corresponding to the first resource in the N uplink resources, to obtain the second resource.

18. The apparatus according to any one of claims 14 to 17, wherein the receiving unit is further configured to receive capability information from the terminal device, wherein the capability information comprises L frequency band sets and information about a bandwidth corresponding to a frequency band comprised in the L frequency band sets, and L is a positive integer greater than or equal to 1; and
the apparatus further comprises:
an allocation unit, configured to allocate a third resource to the terminal device based on the capability information and a downlink data amount, wherein the third resource comprises one or more resources, and the third resource belongs to a same frequency band or different frequency bands; and
the sending unit is further configured to send information about the third resource to the terminal device, wherein the third resource is used by an access network device for downlink data transmission.

19. The apparatus according to claim 18, wherein the receiving unit is further configured to receive a resource allocation request from the terminal device, wherein the resource allocation request comprises an uplink data amount; and
the allocation unit is further configured to allocate a fourth resource to the terminal device based on the capability information and the uplink data amount, wherein the fourth resource comprises one or more resources, the fourth resource belongs to a same frequency band or different frequency bands, and a frequency band corresponding to the third resource is the same as or different from a frequency band corresponding to the fourth resource; and
the sending unit is further configured to send information about the fourth resource to the terminal device, wherein the fourth resource is used by the access network device for uplink data reception.

20. A communication apparatus, comprising:
a receiving unit, configured to receive resource information from an access network device, wherein the resource information comprises information about N uplink resources and information about M downlink resources, N and M are integers greater than or equal to 2, the N uplink resources belong to one or more frequency bands, the M downlink resources belong to one or more frequency bands, and a frequency band to which the N uplink resources belong is the same as or different from a frequency band to which the M downlink resources belong; and
a sending unit, configured to send a random access request to the access network device over a first resource, wherein the first resource is one of the N uplink resources; and
the receiving unit is further configured to receive a random access response from the access network device over a second resource, wherein the second resource is one of the M downlink resources.

21. The apparatus according to claim 20, wherein the apparatus further comprises:
a selection unit, configured to select the first resource from the N uplink resources.

22. The apparatus according to claim 21, wherein the selection unit is specifically configured to select the first resource from the N uplink resources based on a capability of the terminal device.

23. The apparatus according to any one of claims 20 to 22, wherein one of the N uplink resources corresponds to a plurality of downlink resources in the M downlink resources, and the apparatus further comprises:
a first determining unit, configured to determine a downlink resource corresponding to the first resource in the N uplink resources, to obtain K downlink resources, wherein the K downlink resources comprise the second resource, and K is an integer greater than or equal to 2 and less than or equal to M; and
that the receiving unit receives the random access response from the access network device over the second resource comprises:
receiving the random access response from the access network device over the K downlink resources.

24. The apparatus according to claims 20 to 22, wherein one of the N uplink resources corresponds to one of the M downlink resources, and the apparatus further comprises:
a second determining unit, configured to determine a downlink resource corresponding to the first resource in the N uplink resources, to obtain the second resource.

25. The apparatus according to any one of claims 20 to 24, wherein the sending unit is further configured to send capability information to the access network device, wherein the capability information comprises L frequency band sets and information about a bandwidth corresponding to a frequency band comprised in the L frequency band sets, and L is a positive integer greater than or equal to 1; and
the receiving unit is further configured to receive information about a third resource from the access network device, wherein the third resource comprises one or more resources, the third resource belongs to a same frequency band or different frequency bands, and the third resource is used by the terminal device to receive downlink data.

26. The apparatus according to claim 25, wherein the sending unit is further configured to send a resource allocation request to the access network device, wherein the resource allocation request comprises an uplink data amount; and
the receiving unit is further configured to receive information about a fourth resource from the access network device, wherein the fourth resource comprises one or more resources, the fourth resource belongs to a same frequency band or different frequency bands, and the fourth resource is used by the terminal device to transmit uplink data.

27. A communication apparatus, comprising a processor, a memory, and a transceiver, wherein the transceiver is configured to: receive information from a communication apparatus other than the communication apparatus, and output information to a communication apparatus other than the communication apparatus, and the processor invokes a computer program stored in the memory to implement the method according to any one of claims 1 to 13.

28. A computer-readable storage medium, wherein the computer-readable storage medium stores a computer program or computer instructions, and when the computer program or the computer instructions are run, the method according to any one of claims 1 to 13 is implemented.

29. A chip, comprising a processor, configured to execute a program stored in a memory, wherein when the program is executed, the chip is enabled to perform the method according to any one of claims 1 to 13.

30. A computer program product, wherein the computer program product comprises computer program code, and when the computer program code is run, the method according to any one of claims 1 to 13 is implemented.
